(19) Europäisches Patentamt
European Patent Office
Office européen des brevets

(11) **EP 4 391 464 A2**

(12) **DEMANDE DE BREVET EUROPEEN**

(43) Date de publication:
**26.06.2024  Bulletin 2024/26**

(21) Numéro de dépôt: **23216943.3**

(22) Date de dépôt: **15.12.2023**

(51) Classification Internationale des Brevets (IPC):
**H04L 25/02** *(2006.01)*    **G06N 3/084** *(2023.01)*

(52) Classification Coopérative des Brevets (CPC):
**H04L 25/0254; G06N 3/045; G06N 3/0464;
G06N 3/084; G06N 3/09; H04L 25/0212;**
H04L 25/0224

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **22.12.2022  FR 2214287**

(71) Demandeur: **THALES
92190 Meudon (FR)**

(72) Inventeurs:
• **SAHIN, Serdar
92622 GENNEVILLIERS Cedex (FR)**
• **CIPRIANO, Antonio
92622 GENNEVILLIERS Cedex (FR)**
• **PIPON, François
92622 GENNEVILLIERS Cedex (FR)**

(74) Mandataire: **Atout PI Laplace
Immeuble Up On
25 Boulevard Romain Rolland
CS 40072
75685 Paris Cedex 14 (FR)**

(54) **PROCÉDÉ D'AMÉLIORATION DE LA DÉTERMINATION DE L'ESTIMÉE D'UN CANAL DE TÉLÉCOMMUNICATION, DISPOSITIF RÉCEPTEUR ASSOCIÉ**

(57)    L'invention concerne un procédé d'amélioration, dans un dispositif récepteur (10), de la détermination de l'estimée d'un canal de télécommunication en fonction d'au moins une trame de signal comprenant $N_{TS}$ séquences pilotes prédéfinies, comprenant les étapes de :

- fourniture, en entrée d'un réseau de neurones du dispositif récepteur, de premières données d'entrée fonction de la corrélation entre la trame reçue et lesdites séquences pilotes prédéfinies , et obtention, en sortie dudit réseau, d'une estimation d'un masque binaire $\hat{m}_k$, $k = 1$ à $K_{TS}$, déterminé en fonction desdites premières données d'entrée fournies, avec :
$\hat{m}_k = 0$, si le trajet d'indice k est déterminé comme ne comportant que du bruit ;
$\hat{m}_k = 1$, sinon ;

- détermination de deuxièmes estimées du canal, $\left\{ \hat{h}''[n] \right\}_{n=1}^{N_{TS}}$ selon la règle suivante :

$$\hat{h}''_k[n] = \begin{cases} \hat{h}'_k[n], & si\ \hat{m}_k = 1 \\ 0, & si\ \hat{m}_k = 0 \end{cases}, \qquad n = 1, ..., N_{TS}$$

EP 4 391 464 A2

FIG.4

**Description**

**Domaine technique :**

L'invention se situe dans le domaine des télécommunications et concerne plus spécifiquement les traitements effectués dans un dispositif récepteur.

**Technique antérieure :**

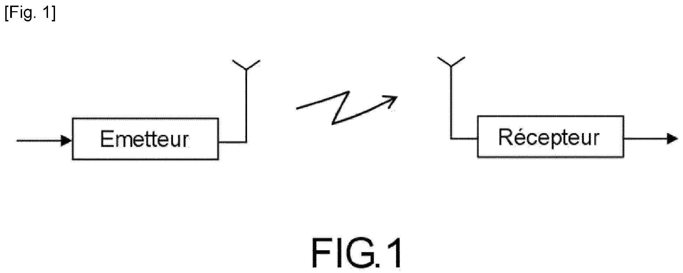

Un transfert d'information d'une source (l'émetteur de télécommunication) à une destination (le récepteur de télécommunication) implique la propagation du signal par un canal de télécommunication, qui peut être par exemple un canal radio, un canal filaire (par exemple un câble coaxial) etc (cf. figure 1). Certains moyens de propagation génèrent une interférence dite inter-symbole (« inter-symbol interférence » - ISI en anglais) sur le signal reçu, autrement dit le signal reçu échantillonné à un instant donné, après compensation des retards de propagation et de traitement et ayant une synchronisation convenable, ne contient pas seulement le symbole envoyé (éventuellement avec une perturbation d'amplitude et de phase) avec du bruit, mais plutôt un mélange (combinaison linéaire) de symboles envoyés.

Il est usuel dans ce cas-là d'utiliser des procédés de traitement, par exemple des algorithmes d'égalisation et de détection, pour réduire l'effet nocif de l'interférence inter-symbole et ils nécessitent au-préalable d'avoir une estimée du canal, qui est utilisée lors de calcul des filtres et d'autres paramètres liés au traitement effectué. Plus cette estimée du canal est proche de la réalisation effective de la réponse impulsionnelle du canal (« channel impulse response » - CIR) qui a lieu lors de la transmission, plus les algorithmes de réception seront efficaces dans leurs tâches. Ainsi les algorithmes d'estimation de canal jouent un rôle crucial dans les récepteurs de systèmes de communication.

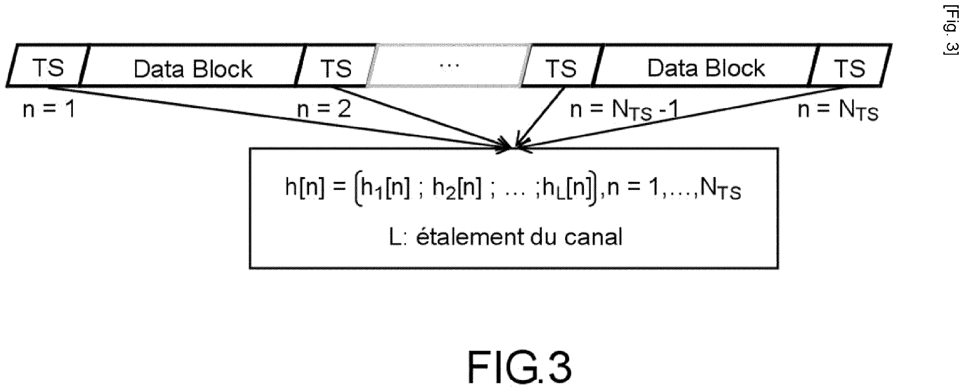

Le schéma usuel de fonctionnement de ces algorithmes d'estimation du canal consiste à exploiter la transmission des séquences dites « pilotes » ou aussi « séquences d'apprentissage » (« training séquence » - TS) ou « séquences de référence » ou encore tout simplement « références », qui accompagnent les données lors de la transmission, et qui sont aussi parfaitement connues auprès du récepteur, par conception, comme illustré sur la Figure 3. La trame est découpée en plusieurs sections comprenant des symboles de données (dites blocs de données - « data blocks » en anglais ou blocs de ressource - « resource blocks » entre autres) et des séquences TS qui peuvent être insérés avant et/ou après ces sections, le nombre de TS dans une trame étant égal à $N_{TS}$. Les symboles de données et de pilotes peuvent êtres, par exemple, issus de constellations réelles ou complexes comme la modulation d'amplitude en quadrature (« quadrature amplitude modulation » - QAM), la modulation par changement de phase (« phase shift keying » - PSK), la modulation par changement de phase et d'amplitude (« amplitude phase shift keying » - APSK) ou la modulation d'amplitude en impulsion (« pulse amplitude modulation » - PAM). Ces techniques sont aussi applicables à des constellations tournées périodiquement comme les $\pi/M$-M-PSK, où $M$ est l'ordre de la constellation et $\pi/M$ radians est l'angle de rotation périodique. Sans perte de généralité, il est aussi possible d'obtenir ces symboles avec des constellations quasi-rectilignes comme la modulation par déplacement de fréquence minimum (Minimum Shift Keying - MSK) ou minimum gaussien (« aussian minimum shift keying » - GMSK), la modulation d'amplitude en quadrature décalée en quadrature (« offset quadrature amplitude modulation » - OQAM), ou avec des modulations à mémoire comme les modulations de phase continues (« continuous phase modulation » - CPM). Les pilotes peuvent aussi appartenir à des familles de séquences spécifiquement conçues pour les taches de synchronisation et d'estimation ou d'étalement de spectre, comme par exemple les séquences de Gold, d'Hadamard, ou encore celles de Golay ou les séquences à amplitude constante et autocorrélation nulle (Constant Amplitude Zéro Autocorrélation - CAZAC en anglais), ou tout autre famille de séquences utilisée dans les systèmes de communication (cf. J. M. Velazquez-Gutierrez and C. Vargas-Rosales, "Sequence Sets in Wireless Communication Systems: A Survey," in IEEE Communications Surveys & Tutorials, vol. 19, no. 2, pp. 1225-1248, 2nd quarter 2017). Une fois que les symboles de données et pilotes sont obtenus, le signal à transmettre est construit avec divers techniques de modulation comme la modulation à multiplexage par répartition orthogonale de la fréquence (« orthogonal frequency division multiplexing » - OFDM), ou un modulation mono-porteuse (« single carrier » - SC) comme le cas illustré sur la Figure 3. Il peut être aussi considéré des généralisations à accès multiple de ces modulations comme le OFDM à accès multiple (« orthogonal frequency division multiple access » - OFDMA) ou la modulation mono-porteuse à accès multiple par répartition en fréquence (« single carrier - frequency division multiple access » - SC-FDMA), ou encore les généralisations avec une mise-en-forme spectrale (« spectrally shaped »).

Les algorithmes d'estimation de canal exploitent la connaissance préalable des séquences pilotes présentes dans ces signaux émis, pour obtenir une estimation du CIR, ainsi que du rapport signal-sur-bruit et interférence (« signal and interférence to noise ratio »

- SINR) du canal. Il existe des estimateurs de canal linéaires et non-linéaires et, parmi les estimateurs linéaires, on peut notamment citer l'algorithme de moindres-carrées (« least squares » - LS) et l'algorithme de la minimisation de l'erreur quadratique moyenne (« minimum mean square error » - MMSE) linéaire (LMMSE). Ces estimateurs linéaires peuvent être implémentés dans le domaine temporel ou fréquentiel, pour pouvoir par exemple réduire la complexité de ces algorithmes.

En référence à nouveau à la figure 3, la réponse impulsionnelle du canal sur chacun des TS, supposée être étalée sur L symboles maximum, s'écrit ainsi :

$$h[n] = \left[ h_1[n]; h_2[n]; \dots; h_L[n] \right], n = 1, \dots, N_{TS}.$$

Supposons que le canal de transmission $h[t]$ (en remplaçant pour ce paragraphe l'indice des séquences TS $n$ par l'instant du temps continu $t$) considéré soit un processus aléatoire stationnaire caractérisé par :

- sa moyenne temporelle : $\mathbb{E}\left[h[t]\right] \triangleq m_h$ , avec $\mathbb{E}[\cdot]$ la fonction espérance,

- sa matrice d'autocorrélation : $\mathbb{E}\left[h[t]h^H[t]\right] \triangleq R_h$ , avec $(\cdot)^H$ dénotant la transposée hermitienne d'un vecteur ou d'une matrice,

- et ses fonctions d'autocorrélation temporelle pour chacun de ses trajets $l = 1, \dots, L$, avec $\mathbb{E}\left[h_l^H[t]h_l[t + \Delta t]\right] \triangleq \rho_{h,l}(\Delta t)$ .

Les deux premières caractéristiques statistiques correspondent à ce qu'on appelle aussi le profil de délai et de puissance (« power-delay profile » - PDP), et la dernière caractéristique correspond aux propriétés dynamiques générées par le décalage résiduel de la fréquence porteuse (« carrier frequency offset » - CFO) des équipements et par la mobilité des équipements, caractérisée par l'étalement ou le décalage Doppler (« Doppler spread or shift »). Dans la suite de ce document, par « profil de canal », nous entendons l'ensemble des trois caractéristiques statistiques pour le canal considéré, alors que « PDP » ou « profil PDP » font référence aux deux premières caractéristiques.

Supposons de disposer d'un modèle d'observation linéaire de chaque TS, (ce qui est valable dans le domaine temporel ou fréquentiel : seule la forme des matrices et des vecteurs change) :

$$y[n] = S[n]h[n] + w[n],$$

où y[n] est le signal reçu observé correspondant à la $n^{ième}$ TS, $S[n]$ est la matrice des symboles de référence pour la $n^{ième}$ TS, connue du récepteur, $h[n] = [h_1[n]; \dots; h_k[n]; \dots ; h_{K_{TS}}[n]]$ est le vecteur colonne correspondant à la réponse impulsionnelle du canal à estimer, mais étendu à la longueur de la séquence TS, $K_{TS}$, avec rajouts de zéros (par conception on travaille avec $K_{TS} > L$), et $w[n]$ le bruit gaussien additif indépendant et identiquement distribué (i.i.d.) de variance $\sigma_w^2$ . On notera qu'une extension de ce modèle au cas multi-antennaire en réception (i.e. « single-input multiple-output » - SIMO) donne lieu à une réponse impulsionnelle constituée par des vecteurs colonne spatiales $h_k[n] = [h_{k,1}[n]; \dots ; h_{k,N_R}[n]]$ avec $N_R$ le nombre d'antennes de réception. Dans ce cas, le modèle d'observation concerne des vecteurs de taille $K_{TS}N_R$, avec $h[n] = [h_1[n]; \dots; h_k[n]; \dots; h_{K_{TS}}[n]]$ et le bruit sera alors caractérisé par la matrice de covariance spatiale $R_w$ de taille $N_R \times N_R$. Dans le cas mono-antennaire (pour garder la description simple), la $k^{ième}$ composante du vecteur $h[n]$, $h_k[n]$ correspond donc au $k^{ième}$ trajet de la réponse impulsionnelle du canal de télétransmission qui affecte la $n^{ième}$ TS de la trame.

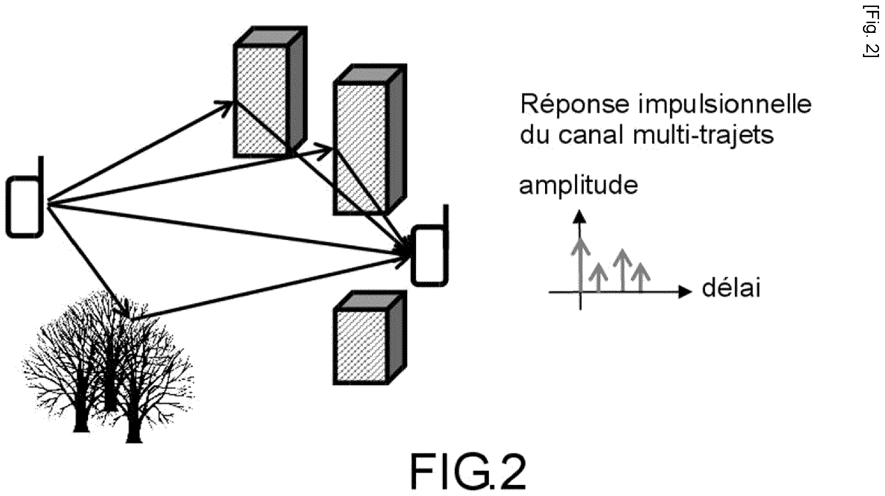

Le trajet $h_k[n]$ a un délai (ou encore un retard) de k symboles, si le modèle d'observation utilisé est au temps symbole, autrement le délai est de k échantillons, si le modèle d'observation utilisé est obtenu avec une fréquence d'échantillonnage supérieure à la fréquence des symboles. En effet, il y a souvent plusieurs trajets indirects entre l'émetteur et le récepteur dus aux réflexions sur les objets environnants, auxquels s'ajoute le trajet direct en cas de visibilité directe (voir Fig. 2). Le signal reçu est donc la résultante de plusieurs composantes associées à des valeurs de retard distinctes et caractérisées par des amplitudes, des angles de phase et des directions d'arrivée différentes.

Pour finir, l'interférence inter-symboles affectant le signal reçu n'est pas uniquement causé par le canal de propagation physique, puisque les filtres de mise en forme et le comportement fréquentiel des composants électroniques du radio-émetteur et du radiorécepteur engendrent de l'interférence en étalant la réponse du canal physique. Ainsi le canal équivalent engendré par l'enchainement de ces phénomènes, et par le rythme et l'instant de l'échantillonnage du signal reçu, déterminé par un algorithme de synchronisation en amont, est modélisé par la multiplication S[n]h[n], où S[n] est la matrice de convolution correspondant au $n^{\text{ième}}$ TS et h[n] est donc la réponse impulsionnelle en bande de base du canal équivalent qui modélise le comportement de tous les blocs de traitement et de l'environnement de propagation entre le signal envoyé échantillonné et le signal reçu échantillonné. Le rythme d'échantillonnage peut être celui du symbole, où un rythme supérieur et cela est déterminé par les endroits exactes de la chaine d'émission et de réception entre où l'on souhaite calculer le canal équivalent. Dans la suite nous utiliserons le raccourci « canal » pour se référer au canal équivalent décrit ici.

Pour alléger les équations, en se plaçant en cas mono-antennaire, et en omettant les indices $n$ liés aux TS, les estimateurs LS et MMSE (ou LMMSE ; sur un modèle de canal linéaire comme ici, MMSE et LMMSE coïncident) non biaisés s'écrivent respectivement :

$$F_{LS} = S(S^H S)^{-1},$$

$$F_{MMSE} = S(\sigma_w^2 I + S^H S R_h)^{-1} R_h \, \text{diag}^{-1}(\xi'),$$

où $R_h$ est la matrice d'autocorrélation du canal, $\sigma_w^2$ est la variance du bruit additif gaussien (supposé blanc ici par simplicité d'expression des formules) et $\xi$ est un vecteur qui permet la correction du biais intrinsèque à l'estimateur LMMSE avec entrées $\xi_k = \left[ R_h (\sigma_w^2 I + S^H S R_h)^{-1} S^H S \right]_{k,k}$. La matrice de l'estimateur LS, respectivement LMMSE, est ensuite appliquée pour calculer l'estimée, $\hat{h}^{LS}$, du canal par LS et respectivement l'estimée du canal, $\hat{h}^{MMSE}$, par LMMSE :

$$\hat{h}^{LS}[n] = F_{LS}^H y[n],$$

$$\hat{h}^{MMSE}[n] = F_{MMSE}^H y[n].$$

Notez que si l'espérance du canal est connue (i.e. les trajets déterministes, liés au facteurs de Rice des trajets, qui, dans la pratique, se produisent en présence d'une ligne de vue dégagée entre émetteur et récepteur), un estimateur LMMSE plus efficace peut être obtenu :

$$F_{MMSE'} = S \left( \sigma_w^2 I + S^H S (R_h - m_h m_h^H) \right)^{-1} R_h \, \text{diag}^{-1}(\xi'),$$

$$\hat{h}^{MMSE'}[n] = m_h + F_{MMSE'}^H (y[n] - S[n] m_h).$$

Il faudra noter que l'estimation de canal LMMSE peut atteindre les performances optimales, en termes de critère d'erreur quadratique moyenne (MSE), lorsque le canal de propagation ne comporte pas de non-linéarités significatives. Cela est souvent le cas d'usage des communications sans-fil terrestres.

Par ailleurs, avec des séquences de références qui satisfont $S^H S = I$, il est possible de réécrire l'estimateur LMMSE avec $F_{MMSE} = F_{LS}(\sigma_w^2 I + R_h)^{-1} \text{diag}^{-1}(\xi')$ . Autrement dit, l'estimateur MMSE linéaire peut être vu comme une correction de l'estimateur LS.

Néanmoins l'algorithme LMMSE reste peu utilisé du fait de sa complexité d'implémentation exorbitante, qui inclut :

- la nécessité d'avoir une connaissance au-préalable des statistiques du canal et du bruit, et notamment la matrice de covariance du canal : obtenir de telles statiques nécessiterait un suivi du comportement du canal à une échelle plus important qu'une trame de la couche PHY, donc introduirait une charge supplémentaire d'échanges entre la couche PHY et les couches plus hautes ;

- l'inversion de la matrice de covariance des observations (par exemple de taille 16×16, 32×32, 64×64, etc.), qui apporte une charge computationnelle conséquente.

C'est pour cette raison que les implémentations pratiques sont contraintes de se contenter d'un estimateur de canal LS, qui n'a besoin que de la connaissance des TS, et est souvent implémenté dans le domaine fréquentiel pour bénéficier d'une complexité computationnelle plus faible. Ces estimées sont toutefois très affectés par le bruit du canal et peuvent significativement limiter les performances des traitements qui suivent.

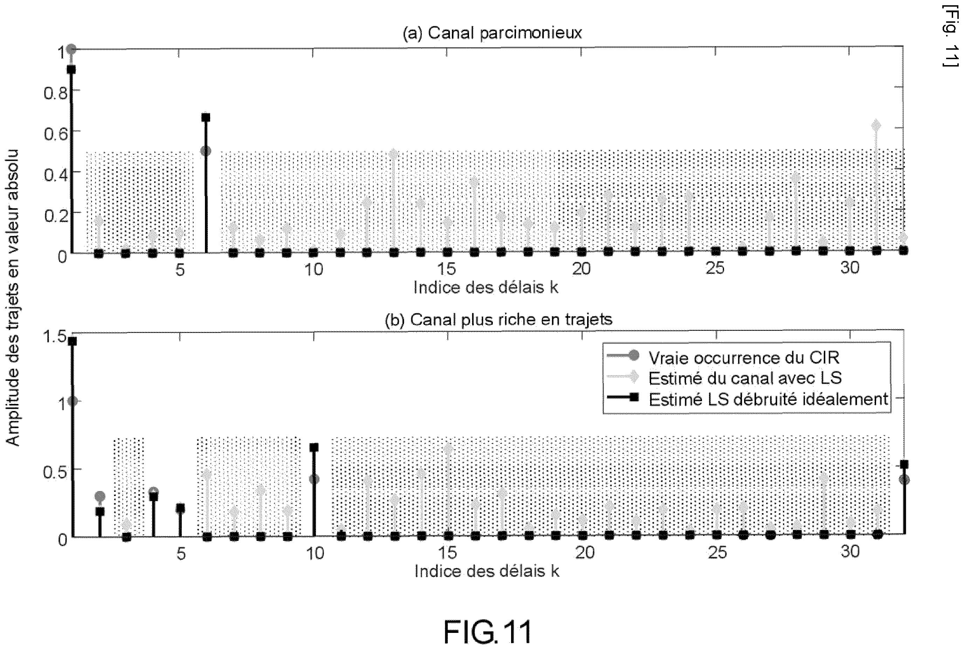

La figure 11 représente les valeurs absolues de la réponse impulsionnelle (CIR) exacte du canal $|h_k[n]|$, de l'estimée LS de la CIR du canal, $|\hat{h}_k^{LS}[n]|$, et d'estimée LS de la CIR du canal parfaitement débruitée, $|h_k^\star[n]|$, en ordonnée, en fonction de l'indice $k$ des trajets en abscisse, allant de 1 à $K_{TS}$, dans le cas d'un canal cyclique. Ce cas correspond aux modèles où la réponse impulsionnelle du canal est $K_{TS}$-périodique (cas typique sur les systèmes OFDM ou mono-porteuse avec traitement en domaine fréquentiel) et les trajets anti-causaux se retrouvent à la fin de la réponse impulsionnelle. La figure 11 présente le cas d'un canal avec peu de multitrajets (sous-figure (a), avec deux trajets non nuls), dit canal parcimonieux et dans le cas d'un canal plus riche en trajets (sous-figure (b), avec six trajets non nuls).

Avec l'essor des techniques d'apprentissage profond, des algorithmes d'estimation de canal aidés par des réseaux de neurones sont apparus. Ces techniques ont toutefois des problèmes de généralisation par rapport au profil PDP du canal et si elles parviennent à fournir des comportements proches de l'estimateur MMSE, cela arrive seulement sur des familles de canal limitées à un seul profil statistique ou à des profils statistiques très proches.

Par exemple, D. Luan and J. Thompson, "Attention based neural networks for wireless channel estimation," arXiv preprint, arXiv:2204.13465, April 2022, utilise un encodeur de type « Transformer » avec un « multi-head attention » et un décodeur qui a une structure de réseau de neurones convolutif (Convolutional Neural Network - CNN en anglais) avec connexions résiduelles. Le Transformer et aussi le CNN résiduel utilisent un type de normalisation qui s'appelle « layer normalization » définie dans J. L. Ba, J. R. Kiros, and G. E. Hinton. "Layer normalization." arXiv preprint, arXiv:1607.06450, July 2016. Cette structure fait preuve de capacité de généralisation en fonction de la puissance du bruit et du niveau du mobilité (Doppler), mais pas sur le profil du canal. Le modèle reste très complexe avec plus de 100 00 paramètres pour faire juste de l'estimation et interpolation de canal.

Dans D. Luan and J. Thompson, "Low complexity channel estimation with neural networks solutions," arXiv preprint, arXiv:2201.09934v1, January 2022, les auteurs étudient des réseaux avec des connexions résiduelles, issus de K. He, X. Zhang, S. Ren and J. Sun, « Deep residual learning for image recognition », IEEE Conférence on Computer Vision and Pattern Recognition (CVPR), Jun. 2016. Ces réseaux sont entraînés sur un profil Extended Pedestrian A (EPA) et puis testés dans des canaux issus de profils Extended Typical Urban (ETU), ayant un étalement maximal de 5 μs, et Extended Vehicular A (EVA), avec un étalement maximal de 2.5 μs. Il s'agit là de profils nettement différents de celui du EPA et générant une réelle interférence au récepteur. Les auteurs montrent comme leur réseau, et d'autres réseaux similaires de la littérature, n'ont pas de capacité de généralisation, avec ce procédé d'entraînement, les performances en MSE des estimateurs de canal saturent très rapidement.

M. V. Lier, A. Balatsoukas-Stimming, H. Corporaal and Z. Zivkovic, "OPTCOMNET: Optimized Neural Networks for Low-Complexity Channel Estimation," ICC 2020 - 2020 IEEE International Conférence on Communications (ICC), pp. 1-6, June 2020 traite de l'amélioration de l'estimation de canal et de son interpolation dans le domaine fréquentiel. Les auteurs utilisent une simple structure résiduelle avec des couches cachées complètement connectées entre l'entrée et la connexion résiduelle, de façon à faire apprendre au réseau le bruit qu'il faut soustraire pour débruiter l'estimation de canal. Les résultats de ce travail montrent aussi qu'il est plus intéressant d'utiliser des réseaux avec des paramètres optimisés sur des sous-intervalles de rapport signal-sur-bruit (« signal-to-noise ratio » - SNR) spécifiques, pour parvenir à atteindre de meilleures performances.

CN 113572708A propose un réseau de neurones délivrant en sortie les estimées de canal dé-bruitées, en fonction des estimées de canal en entrée. Toutefois cette solution n'est pas satisfaisante en termes d'efficacité et de généralisation. En effet, la structure utilisée est un réseau large avec l'enchaînement de plusieurs couches entièrement connectées avec près de 328832 paramètres et presqu'autant d'opérations. L'entraînement du réseau de neurones est effectué en fixant le seuil de débruitage à la valeur 0.0001, ce qui sera limitant vis-à-vis de la généralisation à des SNR différents et à des canaux à évanouissement. Par ailleurs l'utilisation d'une fonction de coût de norme L2 (ou critère MSE) ne permet pas un apprentissage fin à haute SNR.

En synthèse, dans l'art antérieur :

- les méthodes d'estimation de canal améliorées classiques sont soit limitées par leur complexité computationnelle (e.g. inversions de matrice) soit non-réalisables par la difficulté d'obtention de métriques (e.g. statistiques des canaux de transmission) qui sont requises par ces algorithmes ;

- les méthodes d'estimation de canal améliorées qui utilisent des réseaux de neurones rencontrent divers problèmes de généralisation, notamment quand on étudie les réseaux qui essaient d'améliorer les estimés LS :

    lorsqu'on considère des réseaux qui sont entraînés sur une base de donnée avec certains profils de canaux spécifiques similaires entre eux, ces réseaux apprennent à bien les traiter, pour s'approcher des performances de l'estimateur MMSE, mais ils dégradent les performances sur des canaux qui ne font pas partie de la base de données,

    alternativement, quand on considère des réseaux qui sont entraînés sur une base de données avec une large variété de profils de canaux, ces réseaux perdent leur intérêt et apportent peu voire pas d'améliorations vis-à-vis des estimées LS.

En conclusion, si certaines références commencent à traiter la généralisation des estimateurs de canal à base de réseaux de neurones à des profils de canal substantiellement différents, une solution avec une complexité raisonnable n'a pas encore été révélée.

Il existe donc un besoin d'améliorer la qualité des estimées du CIR tout en limitant la complexité d'estimation.

**Résumé de l'invention :**

A cet effet, suivant un premier aspect, la présente invention décrit un procédé d'amélioration de la détermination de l'estimée d'un canal de télécommunication entre un dispositif émetteur et un dispositif récepteur, en fonction d'au moins une trame de signal comprenant $N_{TS}$ séquences pilotes prédéfinies, chacune de longueur $K_{TS}$, transmise via ledit canal à destination du dispositif récepteur de télécommunication et

une première estimation du canal de télécommunication ayant été effectuée, suite à la réception de ladite trame par ledit dispositif récepteur, en fonction de ladite trame reçue et desdites $N_{TS}$ séquences pilotes prédéfinies et ayant fourni au moins des premières estimés de la réponse impulsionnelle du canal $\left\{\widehat{\boldsymbol{h}}'[n]\right\}_{n=1}^{N_{TS}}$ ; avec

$$\widehat{\boldsymbol{h}}'[n] = \left[\hat{h}'_1[n], \hat{h}'_2[n], \ldots, \hat{h}'_{K_{TS}}[n]\right]$$ où $\hat{h}'_k[n]$ correspond au $k^{ième}$ trajet de la réponse impulsionnelle du canal de télétransmission relatif à la $n^{ième}$ séquence pilote de la trame ; ledit procédé étant caractérisé en ce qu'il comprend les étapes suivantes mises en oeuvre par le dispositif récepteur :

- fourniture en entrée d'un réseau de neurones du dispositif récepteur de premières données d'entrée, et obtention en sortie dudit réseau d'une estimation d'un masque binaire $\hat{m}_k$, $k = 1$ à $K_{TS}$, déterminé en fonction desdites premières données d'entrée fournies, tel que :

    $\hat{m}_k = 0$, si le trajet d'indice k est déterminé comme ne comportant que du bruit ;

    $\hat{m}_k = 1$, sinon ;

    lesdites premières données d'entrée étant fonction de la corrélation entre la trame reçue et

    lesdites séquences pilotes prédéfinies ;

- détermination de deuxièmes estimées du canal, $\left\{\widehat{\boldsymbol{h}}''[n]\right\}_{n=1}^{N_{TS}}$, en fonction des premières estimées du canal, $\left\{\widehat{\boldsymbol{h}}'[n]\right\}_{n=1}^{N_{TS}}$, et du masque binaire déterminé, selon la règle suivante :

$$\widehat{h}_k''[n] = \begin{cases} \widehat{h}_k'[n], & si \ \widehat{m}_k = 1 \\ 0, & si \ \widehat{m}_k = 0 \end{cases}, \ n = 1, \dots, N_{TS}.$$

L'invention propose ainsi une méthode de d'estimation de canal avec détection de parcimonie (i.e. du support du canal) par réseau de neurones, suivie de la détermination d'une estimée de la réponse impulsionnelle du canal débruitée, en fonction de cette parcimonie, de manière à se rapprocher du comportement idéal de débruitage de la figure 11.

La « détection de la parcimonie du canal » est l'estimation du « support » de la CIR du canal dans le domaine du retard, au temps échantillon ou symbole, selon les applications : il s'agit d'estimer à quels retards (qui correspondent à des indices du temps symbole ou de l'échantillon, i.e. à des trajets distincts) le canal a une puissance non négligeable.

Dans des modes de réalisation, un tel procédé comprendra en outre l'une au moins des caractéristiques suivantes :

- les premières données d'entrée du réseau de neurones comprennent au moins un des ensembles de données parmi les ensembles suivants relatives à ladite trame :

  - les premières estimés du canal $\left\{\widehat{\boldsymbol{h}}'[n]\right\}_{n=1}^{N_{TS}}$,

  - des critère(s) de synchronisation $\{\boldsymbol{c}[n]\}_{n=1}^{N_{Sych}}$, caractérisant la réponse impulsionnelle du canal ;

  - les premières estimés du canal $\left\{\widehat{\boldsymbol{h}}'[n]\right\}_{n=1}^{N_{TS}}$ et des estimés du SINR à travers la variance du bruit $\widehat{\sigma}'^2_w$ relative à ladite trame ou de la matrice de covariance $\widehat{R}_w$ ;

  - les premières estimés du canal $\left\{\widehat{\boldsymbol{h}}'[n]\right\}_{n=1}^{N_{TS}}$ et des estimés du SINR à travers les variances du bruit $\{\widehat{\sigma}'^2_w[n]\}_{n=1}^{N_{TS}}$ ou les matrices de covariance $\{\widehat{\boldsymbol{R}}_w[n]\}_{n=1}^{N_{TS}}$ relatives à chaque séquence pilote ;

  - des critère(s) de synchronisation $\{\boldsymbol{c}[n]\}_{n=1}^{N_{Sych}}$, caractérisant la réponse impulsionnelle du canal et des estimés du SINR à travers la variance du bruit $\widehat{\sigma}'^2_w$ ou de la matrice de covariance $\widehat{R}^w$ ;

- le réseau de neurones a été préalablement entraîné au cours d'une phase d'apprentissage à l'aide d'un ensemble des premières données d'entrée de trames d'apprentissage telle que, pour des premières données d'entrée correspondant à une trame d'apprentissage considérée, la sortie désirée $m_k^*$ du réseau de neurones, à laquelle est comparée la sortie fournie par le réseau de neurones en phase d'apprentissage, est fixée à :

  - 1 si et seulement si un critère prédéfini $crit_k$ est supérieur à un seuil prédéfini $T_h$

  - 0 sinon ;

où le critère $crit_k$ est fonction des réalisations du canal peu ou pas bruités sur les séquences pilotes et au moins un élément, parmi le critère $crit_k$ et le seuil $T_h$, est déterminé en fonction du SNR ou du SINR sur ledit canal de télécommunication pour ladite trame d'apprentissage considérée ;

- le seuil $T_h$ est choisi égal à $\sigma_w^2/K_{TS}$ , où $\sigma_w^2$ est la variance du bruit sur la trame d'apprentissage considérée ;

- le seuil $T_h$ est choisi égal à $\widehat{\sigma}_w'^2 F_c$ , , où $\widehat{\sigma}_w'^2$ est l'estimée de la variance du bruit sur la trame considérée et $F_c$ est une constante qui, sur une plage de SNR d'intérêt pour le profil du canal considéré, minimise l'erreur quadratique moyenne exprimée sous la forme :

$$\min_{T_h} \mathbb{E}\left[\left(\sum_{n=1}^{N_{ts}} \boldsymbol{h}[n] - \widehat{\boldsymbol{h}}^\star[n]\right)^H \left(\sum_{n=1}^{N_{ts}} \boldsymbol{h}[n] - \widehat{\boldsymbol{h}}^\star[n]\right)\right]$$

où IE est l'espérance statistique, sur des réalisations stochastiques du canal au sein du profil et le plage de SNR considérés, et $\widehat{h}^\star[n]$ est une estimé de canal obtenue à travers le débruitage de l'estimé au-préalable $\widehat{h}'[n]$ avec le masque idéal m* via $\widehat{\boldsymbol{h}}^\star[n] = \boldsymbol{m}^\star \odot \widehat{\boldsymbol{h}}'[n]$ ;

le critère $\text{crit}_k = \frac{1}{N_{TS}}\sum_{n=1}^{N_{TS}} h_k[n]^H R_w[n]^{-1} h_k[n]$ , avec $R_w[n]$ la matrice de covariance du bruit affectant la $n^{\text{ième}}$ séquence pilote de la trame d'apprentissage considérée ;

le critère $crit_k$ sera calculé à partir de la formule $crit_k = \frac{1}{N_{TS}}\sum_{n=1}^{N_{TS}} \boldsymbol{h}_k[n]^H \boldsymbol{R}_w[n]^{-1} \boldsymbol{h}_k[n]$ , avec $\boldsymbol{R}_w[n]$ la matrice de covariance du bruit affectant la $n^{\text{ième}}$ séquence pilote de la trame d'apprentissage considérée ;

mais en remplaçant dans ladite formule :

$\boldsymbol{R}_w[n]$ par la valeur moyenne $\boldsymbol{R}_w$ de la matrice de covariance du bruit affectant la trame d'apprentissage considérée et/ou

les réponses impulsionnelles du canal par leur moyenne temporelle sur la trame ;

- lors de la phase d'apprentissage, les poids du réseau de neurones sont obtenus en fonction d'une fonction de coût à base d'entropie binaire croisée ;

le réseau de neurones comprend :

- une ou plusieurs couches d'agrégation des premières données d'entrées pour avoir $N_{in}$ aspects de tenseurs de taille $1 \times K_{TS}$,

- un ou plusieurs couches pour passer de $N_{in}$ aspects à $N_c$ aspects de tenseurs de taille $1 \times K_{TS}$, où $N_c$ est le nombre d'aspects intermédiaires du réseau ;

- $N_L$ couches de type ResNet, et

- un ou plusieurs couches pour passer de $N_c$ à $N_{TS}$ aspects de tenseurs de taille $1 \times K_{TS}$ ;

le procédé d'amélioration de la détermination de l'estimée d'un canal de télécommunication comprend une étape de :

- fourniture, en entrée d'un autre réseau de neurones du dispositif récepteur, de deuxièmes données d'entrée dudit autre réseau de neurones comprenant au moins les deuxièmes estimées du canal, $\left\{\widehat{\boldsymbol{h}}''[n]\right\}_{n=1}^{N_{TS}}$ ,

et obtention en sortie dudit autre réseau de neurones de troisièmes estimées du canal, $\left\{\widehat{\boldsymbol{h}}[n]\right\}_{n=1}^{N_{TS}}$ ;

selon lequel ledit autre réseau de neurones résulte d'une phase d'apprentissage du autre réseau visant à minimiser une fonction de coût, ladite fonction de coût étant fonction de l'erreur quadratique moyenne entre les sorties obtenues dudit autre réseau en phase d'apprentissage et les valeurs souhaitées de la vraie réponse impulsionnelle du canal, obtenus par simulation ;

le procédé d'amélioration de la détermination de l'estimée d'un canal de télécommunication comprend au moins l'une des dispositions i, j suivantes :

i/ les deuxièmes données d'entrée dudit autre réseau de neurones comprennent en outre au moins un élément parmi des informations probabilistes du support du canal délivrées en sortie du réseau de neurones d'estimation du support du canal et une estimée de la variance du bruit ;

j/ ledit autre réseau de neurones comprend :

- un ou plusieurs couches pour passer de $N_{in}$ aspects à $N_c$ aspects de tenseurs de taille $2 \times K_{TS}$ , où $N_c$ est le nombre d'aspects intermédiaires du réseau et $N_{in}$ supérieur à $N_{TS}$ ;

- $N_L$ couches de type ResNet, et

- un ou plusieurs couches pour passer de $N_c$ à $N_{TS}$ aspects de tenseurs de taille $2 \times K_{TS}$.

Suivant un autre aspect, l'invention décrit un dispositif récepteur de télécommunication adapté pour déterminer l'estimée d'un canal de télécommunication entre ledit dispositif récepteur et un dispositif émetteur, en fonction d'au moins une trame de signal comprenant $N_{TS}$ séquences pilotes prédéfinies, chacune de longueur $K_{TS}$, transmise via ledit canal à destination du dispositif récepteur de télécommunication, dans lequel

une première estimation du canal de télécommunication ayant été effectuée, suite à la réception de ladite trame par ledit dispositif récepteur, en fonction de ladite trame reçue et desdites $N_{TS}$ séquences pilotes prédéfinies et ayant fourni au moins des premières estimés de la réponse impulsionnelle du canal $\left\{\widehat{\boldsymbol{h}}'[n]\right\}_{n=1}^{N_{TS}}$ ;

avec $\widehat{\boldsymbol{h}}'[n] = \left[\hat{h}'_1[n], \hat{h}'_2[n], \ldots, \hat{h}'_{K_{TS}}[n]\right]$ où $\hat{h}'_k[n]$ correspond au $k$ième trajet de la réponse impulsionnelle du canal de télétransmission relatif à la $n$ième séquence pilote de la trame ;

ledit dispositif récepteur étant caractérisé en ce qu'il comprend un réseau de neurones adapté pour recevoir en entrée de premières données d'entrée, et pour obtenir en sortie dudit réseau une estimation d'un masque binaire $\hat{m}_k$, $k = 1$ à $K_{TS}$, déterminé en fonction desdites premières données d'entrée fournies, tel que :

$\hat{m}_k = 0$, si le trajet d'indice k est déterminé comme ne comportant que du bruit ;

$\hat{m}_k = 1$, sinon ;

lesdites premières données d'entrée étant fonction de la corrélation entre la trame reçue et lesdites séquences pilotes prédéfinies ;

ledit dispositif récepteur (10) étant adapté pour déterminer des deuxièmes estimées du canal, $\left\{\widehat{\boldsymbol{h}}''[n]\right\}_{n=1}^{N_{TS}}$ , en fonction des premières estimées du canal, $\left\{\widehat{\boldsymbol{h}}'[n]\right\}_{n=1}^{N_{TS}}$ , et du masque binaire déterminé, selon la règle suivante :

$$\hat{h}_k''[n] = \begin{cases} \hat{h}_k'[n], & si \ \hat{m}_k = 1 \\ 0, & si \ \hat{m}_k = 0 \end{cases}, \ n = 1, \dots, N_{TS}.$$

**Brève description des figures** :

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 représente un système de télétransmission sans fils avec un émetteur et un récepteur ;

[Fig. 2] La figure 2 représente schématiquement l'origine d'un canal multi-trajet, les trajets étant générés par des réflecteurs rencontrés par les ondes électromagnétiques du signal ;

[Fig. 3] La figure 3 est un exemple de structure d'une trame dans le cas d'une transmission mono-porteuse ;

[Fig. 4] La figure 4 représente schématiquement des blocs de traitement dans un dispositif récepteur de télécommunication dans un mode de réalisation ;

[Fig. 5] La figure 5 est un organigramme représentant un procédé d'amélioration de la détermination de l'estimée d'un canal de télécommunication dans un mode de réalisation de l'invention ;

[Fig. 6] La figure 6 est un exemple d'architecture d'un réseau de neurones mis en oeuvre dans le bloc 12 (de la Fig. 4) d'estimation de masque dans un mode de réalisation de l'invention ;

[Fig. 7] La figure 7 est un exemple de structures mis en oeuvre dans l'architecture de la figure 6 dans un mode de réalisation de l'invention ;

[Fig. 8] La figure 8 est un exemple d'architecture d'un réseau de neurones mis en oeuvre dans le bloc 16 (de la Fig. 4) de raffinement de l'estimation de canal dans un mode de réalisation de l'invention ;

[Fig. 9] La figure 9 est un exemple de réseau de neurones mis en oeuvre dans le bloc 12 (dans la Fig. 4) d'estimation de masque dans un mode de réalisation pour des trames mono-porteuses avec quatre séquences pilotes ($N_{TS}$ = 4) de $K_{TS}$ = 32 symboles ;

[Fig. 10] La figure 10 est un exemple de réseau de neurones mis en oeuvre dans le bloc 16 (dans la Fig. 4) de raffinement de l'estimation de canal dans un mode de réalisation de l'invention pour des trames mono-porteuses avec quatre séquences pilotes ($N_{TS}$ = 4) de $K_{TS}$ = 32 symboles ;

[Fig. 11] La figure 11 illustre le résultat d'une solution de débruitage idéal de canal comparé à une méthode LS.

Des références identiques peuvent être utilisées dans des figures différentes lorsqu'elles désignent des éléments identiques ou comparables.

**Description détaillée** :

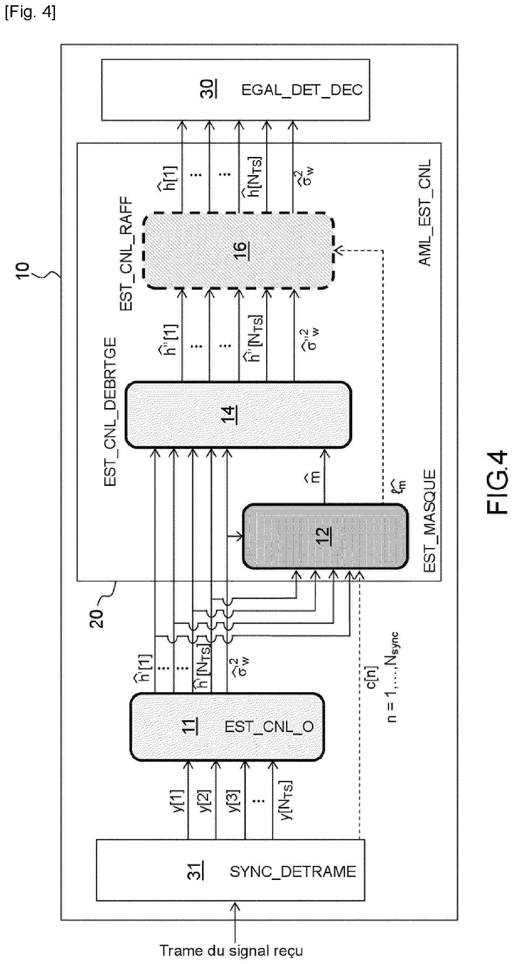

Un dispositif récepteur de télécommunication 10 est représenté partiellement en figure 4, dans un mode de réalisation de l'invention. Il comprend, outre un bloc de réception de données sur un canal de télécommunication (non représenté) par exemple radiofréquence (UHF, HF, 4G, 5G ...), un bloc 31 de synchronisation et détramage, nommé SYNC_DETRAME 31, un bloc de première estimation de canal 11, nommé bloc EST_CNL_0 11, un module 20 d'amélioration d'estimation du canal, nommé AML_EST_CNL 20 et un bloc de traitement ultérieur 30, nommé EGAL_DET_DEC 30.

Le module 20 d'amélioration d'estimation du canal comprend un bloc 12 d'estimation de masque, nommé EST_MASQUE, un bloc 14 de deuxième estimation de canal, nommé EST_CNL_DEBRTGE et un bloc 16 de raffinement de l'estimation de canal, nommé EST_CNL_RAFF.

Le bloc EST_MASQUE 12 comprend un réseau de neurones, dit réseau de neurones de détection de parcimonie, adapté pour identifier le support du canal, sous la forme de l'estimation d'un masque binaire $\hat{m}$ indiquant les

trajets utiles de la réponse impulsionnelle.

Le bloc EST_CNL_RAFF 16, optionnel, est adapté pour améliorer encore la qualité des estimés débruitées, en se servant dans l'exemple décrit ci-dessous des informations issues du réseau de neurones de détection du support du canal. Ce bloc EST_CNL_RAFF 16 est par exemple réalisé à travers une architecture de réseau de neurones.

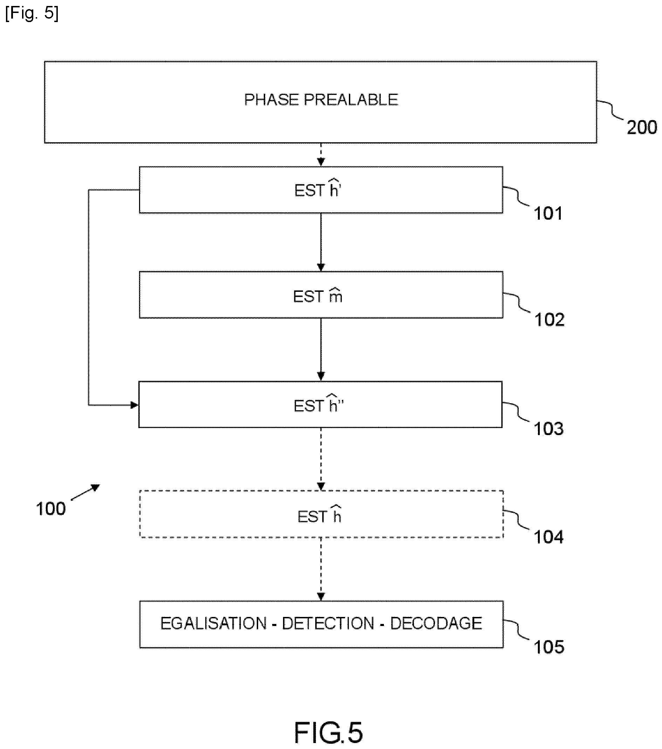

Le bloc SYNC_DETRAME 31, le bloc EST_CNL_0 11, les blocs du module AML_EST_CNL 20 et le bloc de traitement ultérieur 30 sont adaptés pour mettre en oeuvre les opérations qui leur incombent, détaillées ci-dessous en référence à la figure 5, représentant les étapes d'un procédé 100 d'amélioration de l'estimation d'un canal de télétransmission dans un mode de réalisation de l'invention. Les étapes 101 à 105 du procédé 100 sont mises en oeuvre relativement à une trame reçue par le dispositif récepteur 10, depuis un dispositif émetteur, via un canal de télécommunication. La structure de la trame est, par exemple, celle décrite en référence à la figure 3.

Une phase 200, préalable à ces étapes 101-105 sera décrite plus loin.

Dans une étape 101, le bloc SYNC_DETRAME 31 effectue les opérations de synchronisation et de détramage, pour extraire les TS notamment, en fonction d'une trame de signal nouvellement reçue par le dispositif récepteur 10. Ces opérations consistent à déterminer l'instant d'échantillonnage et à estimer les décalages résiduels en phase et en fréquence. Après le correction de ces derniers, ce bloc 31 extrait alors, du signal reçu, les parties correspondantes aux TS, $y[n]$ $n = 1, ..., N_{TS}$, et les parties correspondantes aux blocs de données (non-illustrés sur la Figure 4), pour les fournir aux sous-blocs concernés du dispositif récepteur 10, après un éventuel sous-échantillonnage. Afin de pouvoir trouver l'instant d'échantillonnage assurant un bon fonctionnement du récepteur (et d'estimer les décalages en phase et en fréquence), le bloc 31 procède au calcul d'un critère de synchronisation $\{c[n]\}_{n=1}^{N_{synch}}$ où $N_{synch}$ correspond à la fenêtre de recherche de l'instant d'échantillonnage, et les vecteurs $c[n]$ sont souvent issus des inter-corrélations des séquences pilotes (opportunément décalées) avec le signal reçu, et possiblement de l'autocorrélation du signal reçu. Les techniques précises de l'obtention ce ceux-ci sont très spécifiques pour chaque système et ceux-ci sont bien connus de l'homme de l'art, sans conséquence directe sur le caractère inventif du procédé révélé dans ce document. Ce qu'il est important de remarquer ici est que le critère de synchronisation contient de l'information corrélée avec les réponses impulsionnelles du canal, information qu'un réseau de neurones peut extraire et exploiter.

Le bloc EST_CNL_0 11 détermine, dans une première estimation du canal réalisée par le dispositif récepteur 10, les estimés, nommés $\hat{h}'_k[n]$, $n = 1, ..., N_{TS}$, $k = 1, ..., K_{TS}$, de la réponse impulsionnelle du canal sur la trame reçue une fois traitée par le bloc 31, ainsi qu'une estimé de la variance $\hat{\sigma}'^2_w$ (ou de la matrice de covariance $\hat{R}'_w$ au sens large) du bruit sur la trame, en fonction de $y[n]$ $n = 1, ..., N_{TS}$ qu'est le signal reçu correspondant au $n^{ième}$ TS dans la trame. Il utilise un algorithme LS ou tout autre algorithme d'estimation de canal. L'algorithme est par exemple de type LS simplifié (e.g. quand les pilotes ont une autocorrélation idéale et la matrice d'autocorrélation associée est l'identité), ou un algorithme LS régularisé (pour réduire la sensibilité du bruit), ou un algorithme MMSE simplifié (qui par exemple supposent un profil statistique déterminé), ou un algorithme qui utilise du signal contenant de l'interférence en provenance d'un bloc de données inconnus (i.e. « data-aided »), etc.

Dans une étape 102, le réseau de neurones de détection de parcimonie du bloc EST_MASQUE 12, identifie le support du canal, c'est-à-dire l'ensemble de positions sur le vecteur de réponse impulsionnelle qui correspondent à un trajet utile bruité, et non pas seulement à du bruit : il délivre en sortie une estimation d'un masque ; ce masque, délivré en sortie du bloc EST_MASQUE 12, prend la forme d'un vecteur binaire $\hat{m} = [\hat{m}_1, \hat{m}_2, ..., \hat{m}_{K_{TS}}]$ où l'indice $\hat{m}_k = 0$ signifie que les $k^{ième}$ entrées des vecteurs des estimés du canal de la trame $\hat{h}'_k[n]$, avec $n = 1, ..., N_{TS}$ correspondent seulement à du bruit, alors au contraire que $\hat{m}_k = 1$ signifie que les $k^{ième}$ entrées des vecteurs des estimés du canal $\hat{h}'_k[n]$, $n = 1, ..., N_{TS}$ sont des trajets bruités comportant du signal utile de la trame. Ce masque dans un mode de réalisation est fourni implicitement sous forme d'une estimation probabiliste binaire ou log-probabiliste binaire de la présence de trajet utile. Autrement dit, le réseau de neurones fournit dans un mode de réalisation comme sortie :

- un vecteur probabiliste $\hat{p}_m$ positif qui indique les positions des trajets utiles avec une valeur supérieure à 0.5, et les positions de bruit avec une valeur inférieur à 0.5, ou
- un vecteur log-probabiliste $\hat{l}_m$ qui indiquerait les positions des « trajets utiles » avec une valeur positive, et les positions de « bruit » avec un valeur négative, tel que la valeur absolue de ceux-ci indique la confiance du réseau sur sa prédiction.

Alors la valeur $\hat{m}_k$ du masque à la position $k$ sera obtenue avec $\mathbf{1}(\hat{p}_{mk} > 0.5)$ ou avec $\mathbf{1}(\hat{l}_{mk} > 0)$ où l'opérateur indicateur $\mathbf{1}(P)$ vaut 1 si la condition $P$ est vraie, et 0 sinon.

Dans une étape 103, le bloc EST_CNL_DEBRTGE 14 détermine une estimation débruitée du canal, $\hat{h}_k''[n]$, $n = 1, ...,N_{TS}$, $k = 1, ..., K_{TS}$, en fonction du masque $\hat{m}$ délivré à l'étape 102 et des estimés $\hat{h}_k'[n]$, $n = 1, ...,N_{TS}$, $k = 1, ...,K_{TS}$, qui avaient été délivrées à l'étape 101 par le bloc EST_CNL_0 11 avec :

$$\hat{h}_k''[n] = \begin{cases} \hat{h}_k'[n], & \hat{m}_k = 1 \\ 0, & \hat{m}_k = 0 \end{cases} , \quad n = 1, ..., N_{TS}$$

noté aussi $\hat{h}''[n] = \hat{h}'[n] \odot \hat{m}$ en vectoriel, l'opérateur $\odot$ indiquant le produit élément par élément.

Dans une étape 104, optionnelle (et donc dessinée en tirets dans la Fig. 5), le bloc EST_CNL_RAFF 16 améliore encore la qualité des estimations débruitées, en se servant par exemple des informations issues du réseau de neurones de détection de parcimonie dans le bloc EST_MASQUE 12. Ce bloc EST_CNL_RAFF 16 est par exemple réalisé également à travers une architecture de réseau de neurones. Ce réseau de neurones reçoit en entrée $\hat{h}_k'[n]$, $n = 1, ..., N_{TS}$, $k = 1, ..., K_{TS}$, au moins et délivre en sortie, $\left\{\hat{h}[n]\right\}_{n=1}^{N_{TS}}$, une estimé du canal de meilleure qualité (i.e. plus proche de la réalisation réelle du canal).

Dans une étape 105, des traitements ultérieurs sont réalisés sur la trame par le bloc de traitement ultérieur EGAL_DET_DEC 30, par exemple d'égalisation et/ou de détection de symbole utile et/ou de décodage de symboles détectés en fonction des symboles figurant dans les blocs de données de la trame et des estimés de canal délivrées par le module AML_EST_CNL 20, i.e. suivant les modes de réalisation $\hat{h}_k[n]$ ou $\hat{h}_k''[n]$, $n = 1, ...,N_{TS}$, $k = 1, ... , K_{TS}$.

Les étapes 101 à 105 décrites ci-dessus sont mises en oeuvre dans les phases d'inférence des réseaux de neurones considérés.

### *Le réseau de détection de parcimonie*

Pour parvenir à faire un usage satisfaisant des réseaux neuronaux, il importe de bien définir le problème à adresser, de choisir les entrées et les sorties du réseau de neurones de manière adéquate, ainsi que de définir les sorties cibles (parfois appelées étiquettes - « labels » en anglais sur les méthodes d'apprentissage supervisé, telle celle qui est décrite dans cette solution) qu'on souhaite que le réseau atteigne.

Les entrées du réseau de neurones du bloc EST_MASQUE 12 comprennent une ou plusieurs des trois quantités ci-dessous et doivent comprendre au moins une des deux premières quantités décrites ci-dessous, pour chaque trame considérée successivement (tant dans la phase d'apprentissage que dans celle d'inférence) :

**[0050]** - estimés du canal au-préalable $\left\{\hat{h}'[n]\right\}_{n=1}^{N_{TS}}$ obtenues sur les différents séquences pilotes de la trame reçue ; ces estimés sont fonction (au moins) de la corrélation entre la trame reçue et les séquences pilotes prédéfinies ;

**[0051]** - critère(s) de synchronisation $\left\{c[n]\right\}_{n=1}^{N_{synch}}$, par exemple issu(s) d'une corrélation des séquences pilotes avec le signal reçu ou de tout autre algorithme qui permet de calculer un critère de synchronisation contenant implicitement une information sur la réponse impulsionnelle du canal, potentiellement en domaine sur-échantillonnée ;

**[0052]** - estimés du SINR à travers la variance du bruit $\hat{\sigma}_w'^2$ (ou de la matrice de covariance $\hat{R}_w$ au sens large), cas illustré dans la figure 4. Plus généralement, ces estimés peuvent aussi varier à l'intérieur de la trame, par exemple il est possible de fournir une estimé par TS, $\left\{\hat{\sigma}_w'^2[n]\right\}_{n=1}^{N_{TS}}$ (ou $\left\{\hat{R}_w[n]\right\}_{n=1}^{N_{TS}}$), ce cas n'est pas illustré dans la figure 4.

A partir d'un sous-ensemble de ces entrées, le réseau de neurones du bloc 12 estime un masque binaire : la sortie souhaitée du réseau de neurones du bloc 12 est, dans un mode de réalisation, un vecteur log-probabiliste $\hat{l}_m$ qui

indique les positions des « trajets utiles » avec une valeur positive, et les positions de « bruit » avec une valeur négative, tel que la valeur absolue de ceux-ci indique la confiance du réseau sur sa prédiction. Alors le bloc EST_MASQUE 12 détermine un masque binaire $\hat{m}$ qui indique les positions des « trajets utiles » avec :

$$\widehat{m}_k = \begin{cases} 1, & l_{\widehat{m},k} > 0 \\ 0, & \text{sinon} \end{cases}.$$

Dans des modes de réalisation de ce réseau de détection de parcimonie, une ou plusieurs des dispositions sont mises en oeuvre parmi celles détaillées ci-dessous pour les trois aspects suivants :

- stratégie de construction de bases de données d'entraînement, de validation et de test ;

- stratégie d'entraînement ;

- architecture.

Les deux premières étapes de construction des bases des données et de stratégie d'entraînement comportent :

- L'utilisation d'une base de données de réponses impulsionnelle du canal (telles qu'elles seraient perçues par le récepteur du système de télécommunication en entrée du bloc d'estimation préalable du signal 11 en absence de bruit, ou avec un niveau de bruit négligeable par rapport au niveau de bruit minimal dans la plage d'opération du système de télécommunication). Cette base de données peut être générée par un simulateur ou alors peut provenir de campagnes de sondage du canal électromagnétique.

- L'utilisation du bloc EST_CNL_0 11 pour fournir les estimés de canal préalables et éventuellement l'estimation de variance du bruit, et des opérations supplémentaires qui sont décrites dans la partie « *Stratégie de construction de bases de données d'entrainement, de validation et de test du réseau de détection de parcimonie* » pour obtenir une base de données (dataset) d'entraînement.

- et le réseau de neurones de détection du support du canal du bloc EST_MASQUE 12 en cours d'apprentissage, dont la structure et paramètres sont utilisés pendant la phase d'entrainement décrite dans la partie « *Stratégie d'entraînement du réseau de détection de parcimonie* ».

L'étape 200 fournit en sortie les paramètres finals du bloc EST_MASQUE 12, obtenus grâce à l'entraînement. Les blocs 14, 16 ne sont pas utilisés dans le cadre de l'entrainement du réseau de détection de la parcimonie, mais seulement pour celui de raffinement du canal.

Dans un mode de réalisation, l'une et/ou l'autre de ces dispositions sont mises en oeuvre dans une étape préalable 200 aux étapes 101-105 par une plateforme électronique de construction et d'entraînement comme illustré dans la Fig. 5.

*Stratégie de construction de bases de données d'entrainement, de validation et de test du réseau de détection de parcimonie :*

Même si le canal de propagation physique est très parcimonieux, les filtres de mise en forme et les filtres au récepteur étalent les trajets utiles sur plusieurs positions en temps symbole, selon la définition de la fréquence d'échantillonnage et des caractéristiques du filtre.

Dans un premier temps, il importe donc de définir ce que c'est qu'un « trajet utile » dans ce niveau d'abstraction de la réponse impulsionnelle du canal. Plusieurs définitions sont possibles ; dans le cas présent, il est considéré que le trajet $h_k[n]$ à la $k^{ième}$ position de la réponse impulsionnelle du canal idéal est « utile » si et seulement si $crit_k \geq T_h$, où $T_h$ est un seuil (pas forcément fixe) et $crit_k$ est un critère qui agrège les réalisations du canal sur les $N_{TS}$ séquences pilotes.

Par exemple, le critère est choisi égal à $crit_k = \left| \frac{1}{N_{TS}} \sum_{n=1}^{N_{TS}} h_k[n] \sigma_w^{-1} \right|^2$ sur une système à faible mobilité, par exemple, ou bien $crit_k = \frac{1}{N_{TS}} \sum_{n=1}^{N_{TS}} |h_k[n]|^2 \sigma_w^{-2}$ quand le système est susceptible de voir des canaux qui varient rapidement pendant la durée temporelle d'une trame, avec $\sigma_w^2$ la variance du bruit. En effet, si la CIR change suffisamment rapidement dans une trame pour que entre deux TS $n$ et $n'$ un trajet négligeable devienne non-négligeable, ou vice-versa, la moyenne des puissances permettra de donner plus de poids à considérer ce trajet comme utile, alors que la puissance de moyenne aura tendance à « l'absorber » dans la moyenne, dans l'espoir de mieux débruiter le canal. Donc ce choix réside dans les hypothèses sur la durée de la trame vis-à-vis du temps de cohérence du canal qui décrit la durée sur laquelle le canal changerait relativement peu. Dans le cas d'un récepteur multi-antennaire ces deux critères s'écriront respectivement $crit_k = \left(\frac{1}{N_{TS}} \sum_{n=1}^{N_{TS}} \boldsymbol{h}_k[n]^H\right) \boldsymbol{R}_w^{-1} \left(\frac{1}{N_{TS}} \sum_{n=1}^{N_{TS}} \boldsymbol{h}_k[n]\right)$ et

$crit_k = \frac{1}{N_{TS}} \sum_{n=1}^{N_{TS}} \boldsymbol{h}_k[n]^H \boldsymbol{R}_w^{-1} \boldsymbol{h}_k[n]$ , avec $\boldsymbol{R}_w$ la matrice de covariance du bruit. La présence de la variance du bruit

$\sigma_w^2$ (ou respectivement de la matrice de covariance spatial du bruit $\boldsymbol{R}_w$) au sein d'un critère impliquant le canal non bruité $h_k[n]$ (ou respectivement $\boldsymbol{h}_k[n]$) permettra d'adapter la définition d'un « trajet utile » par rapport au niveau de bruit qui affectera les estimés au-préalables $\widehat{h}'_k[n]$ qu'on cherchera à débruiter. Dans un mode de réalisation, on pourrait davantage généraliser les critères de ce procédé, où on pourrait avoir une variance $\sigma_w^2[n]$ (ou respectivement de la matrice de covariance spatial du bruit $\boldsymbol{R}_w[n]$) différente par TS d'indice $n$. Donc $m_k^\star$ qui est la sortie désirée du réseau de neurones (utilisée dans la phase d'apprentissage), est définie comme

$$m_k^\star = \begin{cases} 1, & crit_k \geq T_h \\ 0, & \text{sinon} \end{cases},$$

où le critère $crit_k$ est à choisir en fonction d'hypothèses de fonctionnement du système, parmi par exemple les options mentionnées ci-dessus.
Le choix du meilleur seuil $T_h$ est par exemple effectué à travers la minimisation de l'erreur quadratique moyenne (MSE) exprimée par la formule suivante :

$$\min_{T_h} \mathbb{E}\left[\left(\sum_{n=1}^{N_{ts}} \boldsymbol{h}[n] - \widehat{\boldsymbol{h}}^\star[n]\right)^H \left(\sum_{n=1}^{N_{ts}} \boldsymbol{h}[n] - \widehat{\boldsymbol{h}}^\star[n]\right)\right].$$

où l'espérance IE[.] a été faite sur plusieurs configurations de bruit (i.e. SNR ou SINR), profil de canal, de vitesse de canal et de position relative des séquences pilotes entre elles. Dans la formule, $\hat{h}^\star[n]$ dénote une estimé de canal idéale en terme de parcimonie, obtenue à travers le débruitage de l'estimé au-préalable $\hat{h}'[n]$ avec le masque idéal $\boldsymbol{m}^\star$ via $\hat{h}^\star[n] = \boldsymbol{m}^\star \odot \hat{h}'[n]$, et $h[n]$ est la vraie réponse impulsionnelle du canal. C'est donc $\hat{h}^\star[n]$ qui est fonction du seuil $T_h$. En effet, comme les canaux de propagation sont simulés sur des ordinateurs, ou émulés par des émulateurs de canal, il est possible d'accéder en environnement de laboratoire à la réalisation exacte de la CIR. Donc en exploitant cette opportunité, ces bases de données peuvent être construites.
Il a été déterminé par les inventeurs qu'un masque $\boldsymbol{m}^\star$ constant pour un profil de canal sur l'ensemble des SNR (ou SINR) de fonctionnement ne mène pas vers une optimisation très attractive du MSE. Cependant, un masque adaptatif, obtenu à travers soit un critère, soit un seuil dépendant du SNR (ou SINR), permet d'atteindre des meilleurs points de fonctionnement. Les exemples de $crit_k$ précédemment données permettent de se placer dans ce cas-là, même lorsque les seuils sont fixes comme $T_h = 1/K_{TS}$. Néanmoins, si le critère $crit_k$ ne dépend pas de la variance du bruit $\sigma_w^2$ (ou respectivement de la matrice de covariance spatial du bruit $\boldsymbol{R}_w$), comme par exemple le critère

$$crit_k = \frac{1}{N_{TS}} \sum_{n=1}^{N_{TS}} |h_k[n]|^2$$ (ou respectivement $$crit_k = \left(\frac{1}{N_{TS}} \sum_{n=1}^{N_{TS}} \boldsymbol{h}_k[n]^H\right)\left(\frac{1}{N_{TS}} \sum_{n=1}^{N_{TS}} \boldsymbol{h}_k[n]\right)$$ ), alors un seuil qui dépend du SNR (ou SINR) comme $T_h = \sigma_w^2/K_{TS}$ (ou $T_h = \mathrm{tr}(R_w)/K_{TS}$ dans le cas multi-antennaire où tr est la trace de la matrice) permet d'avoir un résultat satisfaisant sur un vaste ensemble de profils de canal. Pour des meilleures performances, dans un mode de réalisation, une constante $F_c$ pour chaque profil statistique de canal parmi une pluralité de profils prédéfinis est déterminée, tel que $T_h = \sigma_w^2/F_c$ optimise le MSE pour le profil du canal en question sur une plage de SNR de fonctionnement. La plage du SNR de fonctionnement est fonction du système de communication cible, et correspond à la plage de SNR dans laquelle ce système de communication fonctionne, c'est-à-dire permet l'échange d'information avec une fiabilité de transmission acceptable pour les services assurés par le système de communication même. Dans ce cas $T_h$ devient aussi fonction du profil statistique de canal, mais cela ne gêne nullement la faisabilité pratique de la solution, puisque ces traitements sont faits hors-ligne (off-line) pour créer la base de données des labels (sorties cibles) à utiliser pour l'entrainement.

Une fois que ce travail est réalisé, des bases de données sont constituées des entrées (au moins une des

quantités parmi $\{\widehat{h'}[n]\}_{n=1}^{N_{TS}}, \{c[n]\}_{n=1}^{N_{sych}}$ et éventuellement aussi une entrée supplémentaire $\widehat{\sigma}'^2_w$ ) et des cibles $\boldsymbol{m^*}$, où $\boldsymbol{m^*}$ est le masque objectif, obtenu avec le choix du seuil correspondant à chaque profil de canal sous-jacent utilisé lors du création de la base de données.

Pour finir, pour obtenir un apprentissage le plus robuste possible, il est recommandé d'extraire les quantités susmentionnées pour les bases de données par le biais d'un simulateur représentatif de la forme d'onde et des traitements de couche physique, et en présence d'imperfections et d'aléas potentiels.

Par exemple, il est utilisé dans un mode de réalisation, un simulateur représentatif du comportement de la forme d'onde et de la couche physique, où les aléas et imperfections suivantes ont été représentés :

- un émetteur et récepteur mobiles (e.g. jusqu'à 60 km/h),

- un CFO à l'émetteur (e.g. 2 ppm),

- un délai de propagation aléatoire allant jusqu'au retard maximum gérable par la forme d'onde,

- un ensemble de PDP issu des profils standardisés et des profils à allure exponentielle artificiellement générés.

La liste d'aléas et imperfections précédente est présentée à titre indicatif et ne doit pas être comprise de façon limitante. D'autres aléas et imperfections peuvent être ajoutées ou substituées en fonction de la pertinence et importance de ces effets pour le système utilisant la solution. Par exemple, encore d'autre effets sont un CFO aussi à la réception, un modèle d'amplification non-linéaire, un modèle de désappairage I/Q, en général tout type d'imperfection dans les blocs radio fréquence (RF) à l'émission et réception, des modèles de calibration antennaire imparfaite, des modèles de bruit de phase, des délais de propagations ou d'étalement temporel du canal qui dépassent les limites gérables convenablement par le système, des brouilleurs ou des systèmes interférents, et de façon générale tout type de bruit impulsif ou non qui n'est pas géré de façon optimale par le système, etc.

La construction de différentes bases de données (i.e. dataset) est préconisée pour l'entraînement avec quelques dizaines de milliers de trames reçues et réparties en fonction des plages SNR spécifiques. Par exemple :

- un dataset 'L' : constitué seulement des données des trames reçues entre 0 et 20 dB de SNR,

- un dataset 'H' : constitué seulement des données des trames reçues entre 30 et 40 dB de SNR,

- un dataset 'MLH' : correspondant à 20% de SNRs de 0 à 20 dB et 80% de SNRs de 30 à 40 dB, et

- un dataset 'M' : correspondant à l'ensemble de trames reçues sur une vaste intervalle de SNR de 0 à 40 dB.

Parmi les datasets cités, à chaque utilisation, dans un mode de réalisation, une portion des données (par exemple 10%) est réservée à l'usage exclusif de validation, et le reste (90% dans l'exemple) pour l'entraînement. Tous ces pourcentages et ces définitions de répartition des datasets ne sont pas contraignants, dans le sens que l'homme de l'art qui traite d'apprentissage supervisé sait régler ces pourcentages pour obtenir les performances le plus proches de l'optimal possible.

Par ailleurs des datasets de test complètement indépendants sont créés pour chaque PDP standardisé, et avec des SNRs à valeurs discrètes pour évaluer les performances MSE en calculant la médiane et les quantités des erreurs quadratiques.

*Stratégie d'entraînement du réseau de détection de parcimonie* :

La stratégie d'entrainement joue un rôle important pour pouvoir trouver des poids de la structure neuronale bien adaptés à la solution du problème algorithmique posé, dans ce cas identifier le support de la réponse impulsionnelle du canal. Un optimiseur typique comme l'algorithme ADAM ou une autre variante de l'algorithme de descente de gradient stochastique (« stochastic gradient descent » - SGD) peuvent être utilisés avec des valeurs usuels de « learning rate » et de taille de mini-batch.

La fonction de coût (« loss function » en anglais), comme il est connu, permet de déterminer les valeurs de poids qui sont utilisées à l'issue de la phase d'apprentissage : le but, dans l'apprentissage, est de baisser le coût calculé par la fonction de coût au fil des itérations d'actualisation de la valeur des poids du réseau de neurones et ce jusqu'à ce que les sorties délivrées par le réseau de neurones soient suffisamment proches (selon un seuil prédéfini) des sorties souhaitées respectives, ici les masques idéaux $\boldsymbol{m^*}$, ou qu'un nombre maximum d'itérations soit atteint. La fonction de coût est choisie dans un mode de réalisation égale à une **fonction à base de l'entropie croisée binaire** entre le masque idéal $\boldsymbol{m^*}$, et la sortie log-probabiliste $l_{\widehat{m}}$ du réseau de neurones.

Pour cela on peut donner l'exemple du « MultiLabelSoftMargin »

$$\mathrm{loss}(\boldsymbol{l_{\widehat{m}}}, \boldsymbol{m^*}) = -\sum_{k=1}^{K_{TS}} \left[ m_k^* \log \frac{1}{1+e^{-l_{\widehat{m},k}}} + (1 - m_k^*) \log \frac{e^{-l_{\widehat{m},k}}}{1+e^{-l_{\widehat{m},k}}} \right],$$

ou bien l'exemple du « BinaryCrossEntropyWithLogitsLoss »

$$\mathrm{loss}(\boldsymbol{l_{\widehat{m}}}, \boldsymbol{m^*}; p) = -\sum_{k=1}^{K_{TS}} \left[ p m_k^* \log \left( \sigma(l_{\widehat{m},k}) \right) + (1 - m_k^*) \log \left( 1 - \sigma(l_{\widehat{m},k}) \right) \right],$$

où $\sigma : x \mapsto \dfrac{1}{1+e^{-x}}$ est la fonction sigmoïde et $p > 0$ est un poids qui renforce ($p > 1$) ou attenue ($p < 1$) l'impact de bien prédire les trajets utiles (i.e. $m_k^* = 1$ ).

Dans un mode de réalisation, une stratégie d'apprentissage de type « curriculum learning » où les datasets d'apprentissage et de validation peuvent évoluer au fur et au mesure des épisodes (« epochs » en anglais) de l'apprentissage, est en outre utilisée. Par exemple l'apprentissage pourrait démarrer dans le dataset 'H' pour bien apprendre le cas haut SNR, puis par la suite inclure les cas faible SNR avec le dataset 'MLH' et pour finir sur le dataset 'M' pour couvrir une large plage de SNR, pour que le réseau puisse généraliser sur toute la plage. Un autre exemple consiste à créer, pour chaque phase de l'apprentissage, un dataset en choisissant un pourcentage variable d'éléments à partir dans un ensemble de datasets préexistant, par exemple 'L', 'H', 'M'. D'autres méthodes connues de l'homme de l'art pour former des datasets pertinents pour une stratégie « curriculum learning » peuvent être utilisées.

Pour finir, dans un mode de réalisation, sont sauvegardés les poids du meilleurs réseau appris en se basant sur le minimum de la fonction de coût (critère du loss), ou sur le critère de la précision par trajet (i.e. $\mathbb{E}\left[ \frac{1}{K_{TS}} \sum_{k=1}^{K_{TS}} \mathbf{1}(m_k^* = \widehat{m}_k) \right]$ ), ou bien sur le critère plus restrictif de la précision d'avoir correctement détecté tout le support de la réalisation de la réponse impulsionnelle du canal (i.e. $\mathbb{E}\left[ \prod_{k=1}^{K_{TS}} \mathbf{1}(m_k^* = \widehat{m}_k) \right]$ ), avec l'opérateur indicateur $\mathbf{1}(P)$ qui vaut 1 si la condition $P$ est vraie, et 0 sinon. Il est possible aussi d'exécuter plusieurs fois la procédure d'apprentissage avec des initialisations différentes des poids du réseau, selon les méthodes connues de l'état de l'art, et de retenir à la fin les poids issus de l'essai qui a minimisé la fonction de coût et/ou alors l'erreur de validation, et/ou les autres critères précédemment décrit dans ce document ou connus par l'homme de l'art.

*Architecture pour le réseau de détection de parcimonie :*

Il a été établi par les inventeurs que les couches résiduelles (ResNet - *« Residual Network »*, c'est-à-dire un ensemble de couches de réseau de neurones ayant une connexion résiduelle tel que définie dans K. He, X. Zhang, S. Ren and J. Sun, « Deep residual learning for image recognition », IEEE Conférence on Computer Vision and Pattern Recognition (CVPR), Jun. 2016) avec des couches convolutives (ou de convolution) ont des comportements très intéressants, et permettent d'atteindre une convergence rapide en quelques époques. L'utilisation des couches de normalisation a contribué aussi à converger vers de résultats particulièrement intéressants.

Un mode de réalisation d'architecture *du réseau de détection de parcimonie à base de ResNet,* particulièrement performant, est illustré sur la **Erreur ! Source du renvoi introuvable**., comprenant :

- une ou plusieurs couches d'entrées qui permettent l'agrégation des observations retenues (estimés du canal préalables, métriques de synchronisation, ou tout autre fonction issue de ces informations), afin de constituer un tenseur d'ordre 2 (i.e. une matrice) de taille $N_{in} \times K_{TS}$, où $N_{in}$ est le nombre d'aspects d'entrée du réseau. Aspect (ou caractéristique, « feature » en anglais) ici correspond à une dimension des tenseurs qui sont traités par les structures neurales, et est aussi connu sous la dénomination canal (en anglais « channel ») dans le jargon des structures neuronales (cela ne désigne cette fois bien sûr pas le canal de propagation), les termes « profondeur » ou de « volume » sont parfois utilisés aussi pour parler du nombre d'aspects.
En outre, l'utilisation des valeurs absolues des entrées de la réponse impulsionnelle peut avoir le double effet bénéfique d'utiliser des entrées réelles à la place des entrées complexes (réduction de dimension et donc de mémoire occupée et de nombre de poids du réseau) et d'évaluer la puissance des entrées, surtout quand les entrées sont mises à l'échelle par rapport à la variance (ou matrice de covariance) du bruit et l'interférence. Pour finir, l'utilisation de ces quantités en domaine logarithmique facilite l'apprentissage grâce à une dynamique des observations plus élevée.

- une ou plusieurs couches neuronales pour permettre le passage de $N_{in}$ aspects vers $N_c$ aspects, où $N_c$ est le nombre d'aspects intermédiaires du réseau. Plus le nombre d'aspects sera grand, plus les couches qui suivent auront de facilité à identifier une caractéristique intéressante des données permettant d'atteindre l'objectif (accompagné d'une complexité calculatoire accrue, ce qui nécessite de faire un compromis).

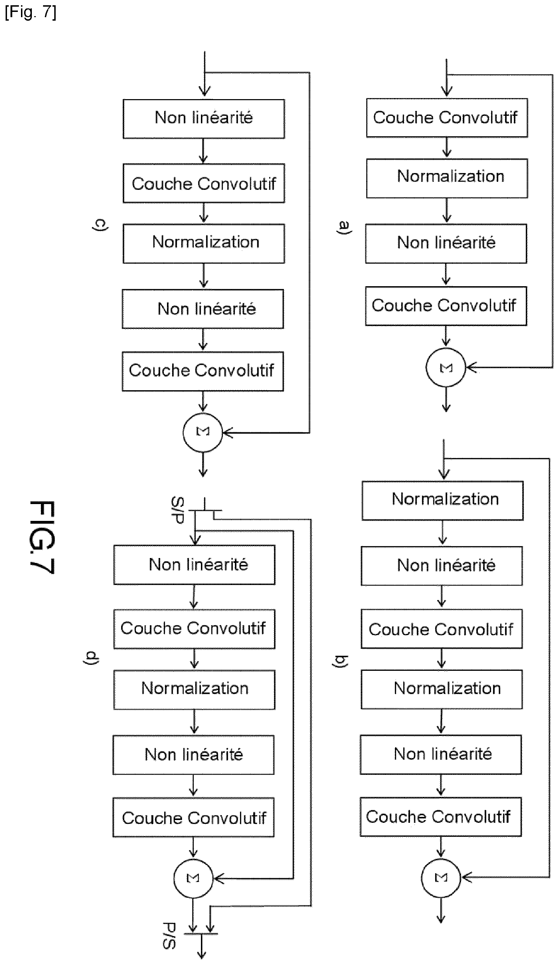

- $N_L$ couches à connexion résiduelles qui travaillent sur ces $N_c$ aspects, en sommant leur entrées à leur sorties par le biais de connexions résiduels. En particulier, des structures de ResNet telles que sur la figure 7, où le ResNet comporte une (cas a) ou plusieurs (cas b) non-linéarités et où l'ordre de placement des couches peut varier (cas a, b, c), et où certaines entrées peuvent être directement connectées vers la sortie sans être affectées par les traitements (cas d).

- une ou plusieurs couches neuronales pour permettre le passage de $N_c$ aspects vers un seul aspect de sortie $\hat{l_m}$ qui correspondra au log-probabilités de présence ou non de trajets sur les différents indices sur la longueur du TS, $K_{TS}$. Par la suite le masque désiré est obtenu par $\mathbf{m} = \mathbf{1}(l_m > 0)$.

***Le réseau de raffinement de l'estimé***

Le réseau de neurones dans le bloc EST_CNL_RAFF 16 est nommé réseau de raffinement de l'estimé et reçoit en entrée un estimé au-préalable de la réponse impulsionnelle du canal, ici $\left\{\widehat{h''}[n]\right\}_{n=1}^{N_{TS}}$, potentiellement débruitée grâce au masque du réseau de détection de parcimonie, et vise à fournir en sortie un estimé de la réponse impulsionnelle du canal $\left\{\widehat{h}[n]\right\}_{n=1}^{N_{TS}}$ avec encore moins de bruit.

De façon optionnelle, il est possible d'utiliser une ou plusieurs des entrées suivantes :

• l'estimé de la variance du bruit $\widehat{\sigma''}^2$, par exemple en provenance du bloc 11, ou d'un autre estimateur de variance de bruit, par exemple basé sur la connaissance du masque $\hat{m}$ qui utiliserait les entrées de la CIR correspondantes à du bruit pour obtenir une nouvelle estimation de sa variance ;

• les estimés (log-)probabilistes $\hat{l_m}$ de la connaissance des trajets utiles et du bruit (qui pourraient par exemple provenir du réseau de détection de parcimonie précédemment cité).

Dans des modes de réalisation de ce réseau de raffinement de l'estimé de la CIR, une ou plusieurs des dispositions sont mises en oeuvre parmi celles détaillées ci-dessous pour les trois aspects suivants :

- stratégie de construction de bases de données d'entrainement, de validation et de test ;

- stratégie d'entrainement :

- architecture.

Les deux premières étapes de construction des bases des données et de stratégie d'entrainement comportent :

- L'utilisation d'une base de données de réponses impulsionnelles du canal (telles qu'elles seraient perçues par le récepteur du système de télécommunication en entrée du bloc d'estimation préalable du canal 11 en absence de bruit, ou avec un niveau de bruit négligeable par rapport au niveau de bruit minimal dans la plage d'opération du système de télécommunication). Cette base de données peut être générée par un simulateur ou alors peut provenir de campagnes de sondage du canal électromagnétique. La base de données contient les cibles de la base de donnée d'entrainement pour le réseau neuronal de raffinement de l'estimé de canal.

- l'utilisation du bloc 11 pour fournir les estimés de canal préalables et éventuellement l'estimation de variance du bruit. Ce bloc effectue les opérations supplémentaires qui sont décrites dans la partie « *Stratégie de construction de bases de données d'entrainement, de validation et de test du réseau de détection de parcimonie* » pour obtenir une base de données (dataset) d'entrainement pour l'apprentissage du réseau de détection du support, seulement si l'entrainement de ce dernier réseau se fait conjointement au réseau de raffinement. Dans le cas où l'entrainement concerne seulement le réseau de raffinement, ces opérations supplémentaires pour obtenir la base de données d'entrainement pour l'apprentissage du réseau de détection du support ne sont pas exécutées.

- L'utilisation du bloc 12, i.e. y compris le réseau de neurones de détection du support, dont la structure et paramètres sont utilisés pendant la phase d'entrainement décrite dans la partie « *Stratégie d'entraînement du réseau de détection de parcimonie* » si le réseau de neurones de détection du support est entrainé aussi. Dans le cas d'entrainement du seul réseau de raffinement, le bloc 12 est utilisé juste pour faire de l'inférence, i.e. les poids du réseau de neurones du bloc 12 sont figés et ce réseau est utilisé juste pour calculer les sorties.

- L'utilisation du bloc 14 pour calculer les estimations débruitées du canal à partir du masque délivré par le bloc 12 et des estimés délivrées par le bloc 11. En présence de bruit sur le signal reçu constitué à partir des canaux de la base de donnée, les sorties de ce bloc 14 constituent les entrées de la base d'entrainement du réseau de neurones de raffinement. D'autres détails dans la partie « *Stratégie de construction de bases de données d'entrainement, de validation et de test du réseau de raffinement* ».

- L'utilisation du bloc 16, i.e. le réseau de neurones de raffinement, dont la structure et paramètres sont utilisés pendant la phase d'entrainement décrite dans la partie « *Stratégie d'entraînement du réseau de raffinement* ».

L'étape 200 fournit en sortie les paramètres finaux du bloc 16, obtenus grâce à l'entrainement. Dans le cas d'entrainement conjoint du bloc 12 et du bloc 16, l'étape 200 fournit en sortie aussi les paramètres finaux du bloc 12.
Dans un mode de réalisation, l'une et/ou l'autre de ces dispositions sont mises en oeuvre dans une étape préalable 200 aux étapes 101-105 par une plateforme électronique de construction et d'entraînement.
Elles sont moins restrictives que celles décrites en référence au réseau de détection de parcimonie.

*Stratégie de construction de bases de données d'entraînement, de validation et de test du réseau de raffinement :*

Les éléments indiqués plus haut relativement à la construction de la base de données pour le réseau de détection de parcimonie s'appliquent aussi ici. Par contre il faudra y rajouter la réponse impulsionnelle du canal idéal

$\{ \boldsymbol{h}[n] \}_{n=1}^{N_{TS}}$ , et la variance du bruit $\sigma_w^2$ (ou la matrice de covariance $\boldsymbol{R}_w$ dans le cas multi-antennaire) comme des cibles supplémentaires dans les bases de données. En effet, comme les canaux de propagations sont simulés sur des ordinateurs, ou émulés par des émulateurs de canal matérielles, ou alors viennent de campagnes de mesures du canal dans des déploiements réalistes (appelées aussi sondage du canal), il est possible d'accéder en environnement de laboratoire à la réalisation exacte de la CIR et du SINR. Donc en exploitant cette opportunité, ces bases de données peuvent être construits.

*Stratégie d'entraînement du réseau de raffinement :*

La différence majeure de la stratégie d'entraînement par rapport au réseau de détection du support est la fonction de coût : ici à la fois l'entrée et la sortie sont des estimés de la réponse impulsionnelle du canal $\{h[n]\}_{n=1}^{N_{TS}}$, qui sont des quantités complexes : des fonctions de coût qui sont fonction de l'erreur quadratique sont par exemple utilisées, l'entraînement visant à minimiser cette fonction de coût (au moins à la rendre inférieur à un seuil prédéfini).

La fonction d'erreur quadratique moyenne (« MeanSquareError ») peut notamment être utilisée :

$$\text{loss}\left(\{\hat{h}[n]\}_{n=1}^{N_{TS}}, \{h[n]\}_{n=1}^{N_{TS}}\right) = \frac{1}{N_{TS}K_{TS}}\sum_{n=1}^{N_{TS}}\sum_{k=1}^{K_{TS}}\left|\hat{h}_k[n] - h_k[n]\right|^2,$$

ce qui permet d'avoir des résultats satisfaisants sur un intervalle donné de SNR. Néanmoins quand l'intervalle est trop large, cette fonction de coût donnera plus de poids aux échantillons faible SNR que haut SNR (ce qui est potentiellement attractif pour les estimateurs de canal, selon le point d'opération du système). Pour une meilleure capacité de généralisation du réseau à tout SNR, l'utilisation de l'erreur quadratique moyenne normalisée par le SNR (« SNRNormalizedMeanSquareError ») est préconisée :

$$\text{loss}\left(\{\hat{h}[n]\}_{n=1}^{N_{TS}}, \{h[n]\}_{n=1}^{N_{TS}}, \sigma_w^2\right) = \frac{1}{N_{TS}K_{TS}}\sum_{n=1}^{N_{TS}}\sum_{k=1}^{K_{TS}}\frac{\left|\hat{h}_k[n] - h_k[n]\right|^2}{\sigma_w^2},$$

ce qui permet à l'apprentissage d'accorder autant de poids aux échantillons haut SNR qu'au faible SNR. Dans le cas d'un récepteur multi-antennaire, ces deux fonctions de pertes s'expriment respectivement comme loss (

$$\{\hat{h}[n]\}_{n=1}^{N_{TS}}, \{h[n]\}_{n=1}^{N_{TS}}\right) = \frac{1}{N_{TS}K_{TS}}\sum_{n=1}^{N_{TS}}\sum_{k=1}^{K_{TS}}\left(\hat{h}_k[n] - \right.$$

$h_k[n])^H(\hat{h}_k[n] - h_k[n])$, et loss (

$$\{\hat{h}[n]\}_{n=1}^{N_{TS}}, \{h[n]\}_{n=1}^{N_{TS}}, \sigma_w^2\right) = \frac{1}{N_{TS}K_{TS}}\sum_{n=1}^{N_{TS}}\sum_{k=1}^{K_{TS}}\left(\hat{h}_k[n] - \right.$$

$h_k[n])^H R_w^{-1}\left(\hat{h}_k[n] - h_k[n]\right)$ ).

Dans un mode de réalisation de l'entrainement du réseau de raffinement, le réseau de détection du support du canal 12 est gardé fixe, par exemple parce que les paramètres (poids des neurones) du réseau de neurones du bloc 12 ont été pré-entraînés selon une des méthodes décrites précédemment ou dans la partie « *Stratégie d'entraînement du réseau de détection de parcimonie* » et sont déjà disponibles. Dans ce cas les fonctions de coût décrites dans cette partie peuvent être utilisées pour l'entrainement du réseau de raffinement 16.

Dans un autre mode de réalisation de l'entrainement du réseau de raffinement 16, le réseau de détection du support du canal du bloc 12 est entrainé conjointement, selon les stratégies connues par l'homme du métier. Par exemple, une fonction de coût globale peut être utilisée, formée par la somme pondérée d'une parmi les fonctions de coût utilisées pour le réseau du bloc 12 et une parmi les fonctions de coût utilisées pour le réseau 16. Dans ce cas, à chaque étape de l'algorithme SGD choisi, les paramètres des deux réseaux sont mis à jour. Une autre stratégie d'entrainement conjoint consiste à optimiser les paramètres d'un réseau (par exemple, le réseau 16) pendant une ou plusieurs étapes de l'algorithme SDG choisi en gardant les paramètres de l'autre réseau (e.g. du bloc 12) figés. Puis, le réseau qui a subi une ou plusieurs étapes de mise à jour de ses paramètres est gardé figé (e.g. le réseau 16) et l'autre réseau (e.g. celui du bloc 12) est mis à jour pendant une ou plusieurs étapes de l'algorithme SDG. Ainsi de suite, l'optimisation alternée des deux réseaux est conduite pendant un certain nombre d'itérations jusqu'à convergence ou à atteindre l'un des critères d'arrêt de l'optimisation connus par l'homme du métier. Dans ces phases d'entrainement alternée, on choisit une parmi les fonctions de coût pertinentes pour le réseau qui est en train d'être optimisé. A chaque itération de l'optimisation alternée les fonctions de couts peuvent être changées.

*Architecture du réseau de raffinement :*

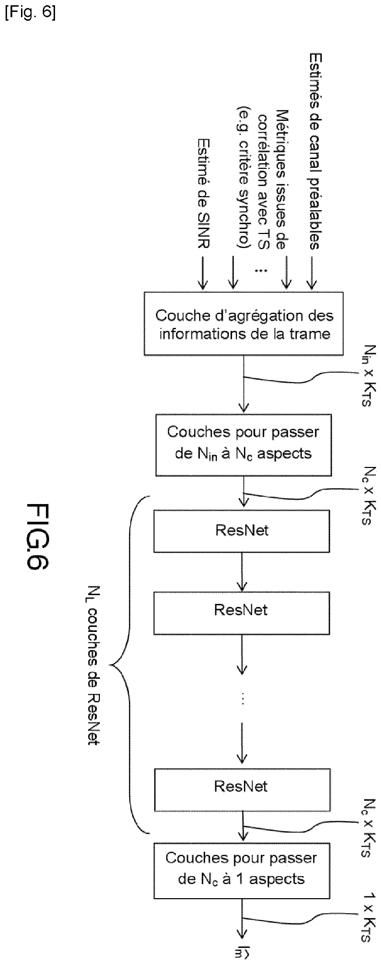

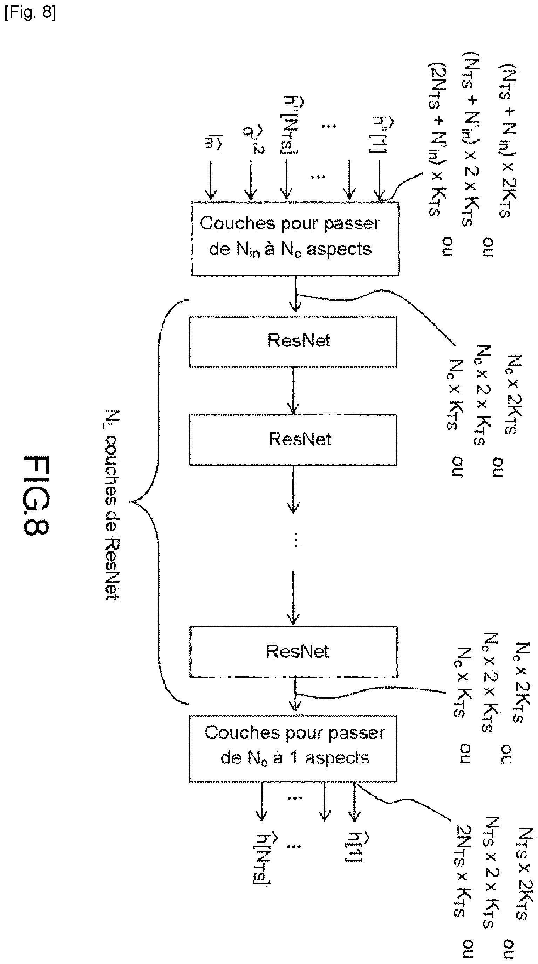

Sur les expérimentations du réseau de raffinement des constats similaires au réseau de détection du support ont été tirés : aussi une architecture similaire à celui de la figure 6 est préconisée, mais avec la différence principale liée au fait de travailler sur des nombres complexes cette fois. Ainsi, comme illustré sur la figure 8 représentant des architectures du réseau de raffinement à base de ResNet**Erreur ! Source du renvoi introuvable.** il est soit possible de travailler avec ces quantités, en considérant les parties réelles et imaginaires comme deux aspects (« features » en anglais) de $K_{TS}$ éléments, et travailler avec convolutions à une dimension, ou de les concaténer sur la dernière dimension pour les considérer comme un seul aspect de $2K_{TS}$ éléments, ou bien de le considérer comme un seul aspect de $2 \times K_{TS}$ éléments et travailler avec des convolutions à 2 dimensions.

## Exemple de mise en oeuvre

On considère un cas d'application où des trames mono-porteuses sont reçues dans le dispositif récepteur 10, avec quatre séquences pilotes ($N_{TS}$ = 4) de $K_{TS}$ = 32 symboles chacune. Une estimation au-préalable du canal est d'abord effectuée avec l'algorithme LS sur chacun de ces quatre TS par le bloc EST_CNL_0 11 (étape 101).

Concernant le réseau de détection de parcimonie dans le bloc EST_MASQUE 12 mis en oeuvre dans le cas d'application ici considéré (trames avec chacune quatre séquences pilotes de 32 symboles) :

- lui sont fournies en entrée seulement les estimées LS $\hat{h}'_k[n]$ déjà disponibles, et une estimation de la variance du bruit du canal ;

- la couche d'agrégation est mise en oeuvre, de manière à avoir un seul aspect, i.e. $N_{in}$ = 1 en calculant la quantité

$$\log\left|\sum_{n=1}^{N_{TS}} \hat{h}'_k[n]\right|^2 - \log \hat{\sigma}'^2 \quad \text{pour } k = 1, ..., K_{TS} ;$$

- $N_c$ = 3 aspects pour les couches résiduelles intermédiaires, et le passage de 1 à 3 aspects se fait avec une couche convolutive séparable (pour un plus faible coût calculatoire) à une dimension, avec un noyau de taille 1, suivie par une couche de normalisation par couche (« layer normalization ») de noyau (3, $K_{TS}$) (i.e. la normalisation est réalisée en calculant la moyenne et la variance sur tous les éléments du tenseur d'ordre 2 de taille $3 \times K_{TS}$) ;

- le réseau de détection comprend $N_L$ = 1 couche résiduelle constituée respectivement d'une non-linéarité ReLU (Rectified Linear Unit - en anglais), d'une couche convolutive séparable à une dimension de noyau de taille 3, d'une couche de normalisation par « mini-batch », d'une autre non-linéarité ReLU, d'une seconde couche convolutive séparable à une dimension de noyau de taille 3 ;

- pour finir la couche de passage à un seul canal, se fait avec une autre couche convolutive séparable à une dimension, avec un noyau de taille 1.

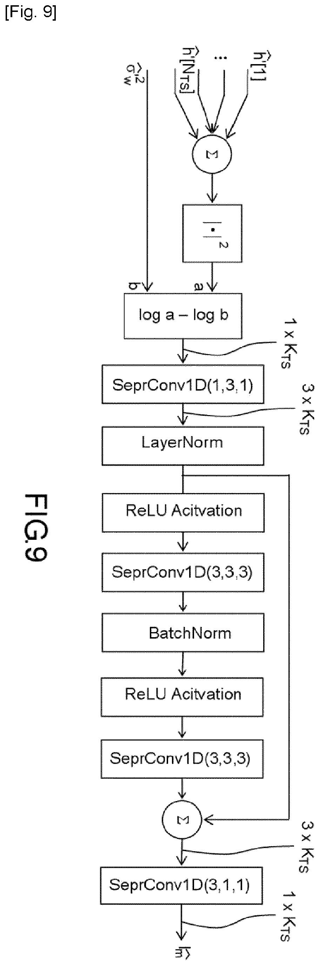

Cette structure est illustrée sur la figure 9.

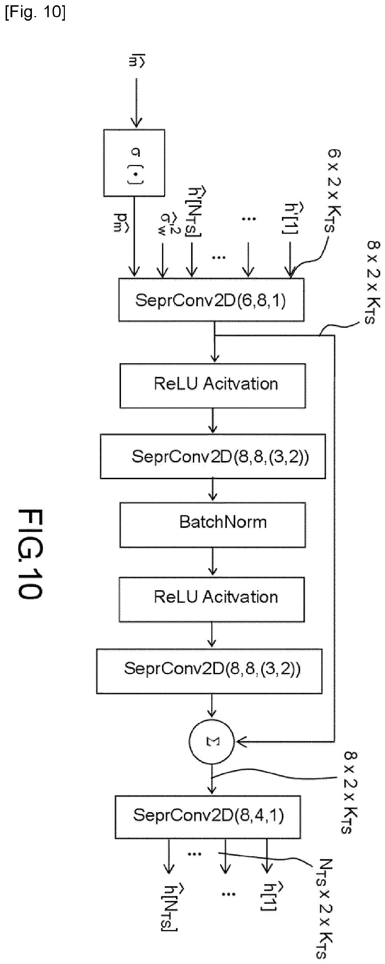

Le réseau de raffinement considéré dans ce cas d'application, en référence à la figure 10, comprend, lui, par exemple, des tenseurs à 3 dimensions pour gérer la représentation des nombres complexes et des convolutions à deux dimensions. Par ailleurs, on associe aux quatre estimés de canal correspondant aux différentes séquences TS, un aspect contenant seulement l'estimé de la variance du bruit du canal, et un aspect qui réplique les estimés log-probabilistiques du réseau de détection de parcimonie, auquel on applique une fonction sigmoïde.

Ce tenseur d'entrée contenant 6 aspects de taille $2 \times K_{TS}$ est traité par une convolution séparable à 2 dimensions, d'une taille de noyau (1,1), pour pouvoir augmenter le nombre d'aspects à 8. Suit un ResNet constitué des non-linéarités ReLU, de convolutions séparables 2D de noyau (3,2) et de normalisation par « mini-batch ». Tout à la fin, une dernière couche de convolution séparable à 2 dimensions, d'une taille de noyau (1,1), permet d'agréger les 8 aspects en 4, cherchant à correctement retrouver les estimées sur les 4 séquences pilotes.

Ainsi selon l'invention, le réseau de neurones ne débruite pas directement les estimées de canal, mais détermine les trajets utiles et non utiles, par le biais de détection du support du canal par réseau neuronal, sous la forme d'un masque binaire et puis un débruitage est effectué en fonction de ce masque binaire.

L'invention proposée dans ce document, effectue ainsi des traitements supplémentaires à la suite d'une première estimation de canal, par exemple par l'algorithme LS, pour rapprocher la qualité des estimées du CIR plus proche du CIR optimal au sens MSE. Ces procédés sont menés grâce à l'utilisation des réseaux de neurones au sein d'une architecture d'intelligence artificielle hybride (IA hybride, faisant référence à des solutions algorithmiques qui injectent dans des solutions IA des données (comme les réseaux de neurones), de la connaissance métier basée sur des méthodes classiques, ou alors l'utilisation ponctuelle de solutions IA basés sur les données). Cette architecture est pensée pour pouvoir maintenir la complexité d'estimation du canal abordable tout en améliorant les performances d'estimation du canal LS grâce à une technique de détection de parcimonie (ou détection de support de la CIR) suivie d'un éventuel filtrage non-linéaire.

Les étapes 101 à 105 du procédé, ou au moins une ou certaines d'entre elles, sont par exemple mises en oeuvre par l'exécution d'instructions logicielles sur un processeur. Alternativement, elles sont mises en oeuvre par un hardware dédié, typiquement un circuit intégré numérique, soit spécifique (ASIC) ou basé sur une logique programmable (par exemple FPGA/Field Programmable Gate Array)

**Revendications**

1. Procédé d'amélioration de la détermination de l'estimée d'un canal de télécommunication entre un dispositif émetteur et un dispositif récepteur (10), en fonction d'au moins une trame de signal comprenant $N_{TS}$ séquences pilotes prédéfinies, chacune de longueur $K_{TS}$, transmise via ledit canal à destination du dispositif récepteur de télécommunication et

   une première estimation du canal de télécommunication ayant été effectuée, suite à la réception de ladite trame par ledit dispositif récepteur (10), en fonction de ladite trame reçue et desdites $N_{TS}$ séquences pilotes prédéfinies et ayant fourni au moins des premières estimés de la réponse impulsionnelle du canal $\left\{\widehat{\boldsymbol{h}}'[n]\right\}_{n=1}^{N_{TS}}$ ;

   avec $\widehat{\boldsymbol{h}}'[n] = \left[\hat{h}'_1[n], \hat{h}'_2[n], ..., \hat{h}'_{K_{TS}}[n]\right]$ où $\hat{h}'_k[n]$ correspond au $k^{ième}$ trajet de la réponse impulsionnelle du canal de télétransmission relatif à la $n^{ième}$ séquence pilote de la trame ;

   ledit procédé étant **caractérisé en ce qu'**il comprend les étapes suivantes mises en oeuvre par le dispositif récepteur :

   - fourniture en entrée d'un réseau de neurones du dispositif récepteur de premières données d'entrée, et obtention en sortie dudit réseau d'une estimation d'un masque binaire $\hat{m}_k$, $k$ = 1 à $K_{TS}$, déterminé en fonction desdites premières données d'entrée fournies, tel que :

   $\hat{m}_k$ = 0, si le trajet d'indice k est déterminé comme ne comportant que du bruit ;
   $\hat{m}_k$ = 1, sinon ;
   lesdites premières données d'entrée étant fonction de la corrélation entre la trame reçue et lesdites séquences pilotes prédéfinies ;

   - détermination de deuxièmes estimées du canal, $\left\{\widehat{\boldsymbol{h}}''[n]\right\}_{n=1}^{N_{TS}}$, en fonction des premières estimées du canal, $\left\{\widehat{\boldsymbol{h}}'[n]\right\}_{n=1}^{N_{TS}}$, et du masque binaire déterminé, selon la règle suivante :

   $$\hat{h}''_k[n] = \begin{cases} \hat{h}'_k[n], & si\ \hat{m}_k = 1 \\ 0, & si\ \hat{m}_k = 0 \end{cases}, \qquad n = 1, ..., N_{TS}$$

2. Procédé d'amélioration de la détermination de l'estimée d'un canal de télécommunication selon la revendication 1, selon lequel les premières données d'entrée du réseau de neurones comprennent au moins un des ensembles de données parmi les ensembles suivants relatives à ladite trame :

   - les premières estimés du canal $\left\{\widehat{\boldsymbol{h}}'[n]\right\}_{n=1}^{N_{TS}}$,

   - des critère(s) de synchronisation $\left\{\boldsymbol{c}[n]\right\}_{n=1}^{N_{sych}}$, caractérisant la réponse impulsionnelle du canal ;

- les premières estimés du canal $\left\{\widehat{\pmb{h}}'[n]\right\}_{n=1}^{N_{TS}}$ et des estimés du SINR à travers la variance du bruit $\widehat{\sigma}'^2_w$ relative à ladite trame ou de la matrice de covariance $\widehat{R}_w$ ;

- les premières estimés du canal $\left\{\widehat{\pmb{h}}'[n]\right\}_{n=1}^{N_{TS}}$ et des estimés du SINR à travers les variances du bruit $\{\widehat{\sigma}'^2_w[n]\}_{n=1}^{N_{TS}}$ ou les matrices de covariance $\left\{\widehat{\pmb{R}}_w[n]\right\}_{n=1}^{N_{TS}}$ relatives à chaque séquence pilote ;

- des critère(s) de synchronisation $\{c[n]\}_{n=1}^{N_{Sych}}$ , caractérisant la réponse impulsionnelle du canal et des estimés du SINR à travers la variance du bruit $\widehat{\sigma}'^2_w$ ou de la matrice de covariance $\widehat{R}_w$.

3. Procédé d'amélioration de la détermination de l'estimée d'un canal de télécommunication selon la revendication 1 ou 2, selon lequel le réseau de neurones a été préalablement entraîné au cours d'une phase d'apprentissage à l'aide d'un ensemble des premières données d'entrée de trames d'apprentissage telle que, pour des premières données d'entrée correspondant à une trame d'apprentissage considérée, la sortie désirée $m_k^{\star}$ du réseau de neurones, à laquelle est comparée la sortie fournie par le réseau de neurones en phase d'apprentissage, est fixée à :

   - 1 si et seulement si un critère prédéfini $crit_k$ est supérieur à un seuil prédéfini $T_h$
   - 0 sinon ;
   où le critère $crit_k$ est fonction des réalisations du canal peu ou pas bruités sur les séquences pilotes et au moins un élément, parmi le critère $crit_k$ et le seuil $T_h$, est déterminé en fonction du SNR ou du SINR sur ledit canal de télécommunication pour ladite trame d'apprentissage considérée.

4. Procédé d'amélioration de la détermination de l'estimée d'un canal de télécommunication selon la revendication 3, selon lequel le seuil $T_h$ est choisi égal à $\sigma_w^2/K_{TS}$ , où $\sigma_w^2$ est la variance du bruit sur la trame d'apprentissage considérée.

5. Procédé d'amélioration de la détermination de l'estimée d'un canal de télécommunication selon la revendication 3, selon lequel le seuil $T_h$ est choisi égal à $\widehat{\sigma}'^2_w F_c$ , où $\widehat{\sigma}'^2_w$ est l'estimée de la variance du bruit sur la trame considérée et $F_c$ est une constante qui, sur une plage de SNR d'intérêt pour le profil du canal considéré, minimise l'erreur quadratique moyenne exprimée sous la forme :

$$\min_{T_h} \mathbb{E}\left[\left(\sum_{n=1}^{N_{ts}} \pmb{h}[n] - \widehat{\pmb{h}}^{\star}[n]\right)^H \left(\sum_{n=1}^{N_{ts}} \pmb{h}[n] - \widehat{\pmb{h}}^{\star}[n]\right)\right].$$

où $\mathbb{E}$ est l'espérance statistique, sur des réalisations stochastiques du canal au sein du profil et le plage de SNR considérés, et $\widehat{h}^{\star}[n]$ est une estimé de canal obtenue à travers le débruitage de l'estimé au-préalable $\widehat{h}'[n]$ avec le masque idéal m* via $\widehat{h}^{\star}[n]$ = m* $\odot$ $\widehat{h}'[n]$.

6. Procédé d'amélioration de la détermination de l'estimée d'un canal de télécommunication selon l'une des revendications 3 à 5, selon lequel le critère $crit_k = \frac{1}{N_{TS}}\sum_{n=1}^{N_{TS}} \pmb{h}_k[n]^H \pmb{R}_w[n]^{-1} \pmb{h}_k[n]$ , avec $\pmb{R}_w[n]$ la matrice de covariance du bruit affectant la $n^{\text{ième}}$ séquence pilote de la trame d'apprentissage considérée.

7. Procédé d'amélioration de la détermination de l'estimée d'un canal de télécommunication selon l'une des revendications 3 à 5, selon lequel le critère $crit_k$ sera calculé à partir de la formule

$$crit_k = \frac{1}{N_{TS}} \sum_{n=1}^{N_{TS}} h_k[n]^H R_w[n]^{-1} h_k[n]$$

, avec $R_w[n]$ la matrice de covariance du bruit affectant la $n^{\text{ième}}$ séquence pilote de la trame d'apprentissage considérée;
mais en remplaçant dans ladite formule :

$R_w[n]$ par la valeur moyenne $R_w$ de la matrice de covariance du bruit affectant la trame d'apprentissage considérée et/ou
les réponses impulsionnelles du canal par leur moyenne temporelle sur la trame.

8. Procédé d'amélioration de la détermination de l'estimée d'un canal de télécommunication selon l'une des revendications précédentes, selon lequel lors de la phase d'apprentissage, les poids du réseau de neurones sont obtenus en fonction d'une fonction de coût à base d'entropie binaire croisée.

9. Procédé d'amélioration de la détermination de l'estimée d'un canal de télécommunication selon l'une des revendications précédentes, selon lequel le réseau de neurones comprend :

- une ou plusieurs couches d'agrégation des premières données d'entrées pour avoir $N_{in}$ aspects de tenseurs de taille $1 \times K_{TS}$,
- un ou plusieurs couches pour passer de $N_{in}$ aspects à $N_c$ aspects de tenseurs de taille $1 \times K_{TS}$, où $N_c$ est le nombre d'aspects intermédiaires du réseau ;
- $N_L$ couches de type ResNet, et
- un ou plusieurs couches pour passer de $N_c$ à $N_{TS}$ aspects de tenseurs de taille $1 \times K_{TS}$.

10. Procédé d'amélioration de la détermination de l'estimée d'un canal de télécommunication selon l'une des revendications précédentes, comprenant une étape de :

- fourniture, en entrée d'un autre réseau de neurones du dispositif récepteur, de deuxièmes données d'entrée dudit autre réseau de neurones comprenant au moins les deuxièmes estimées du canal, $\left\{ \widehat{h}''[n] \right\}_{n=1}^{N_{TS}}$, et obtention en sortie dudit autre réseau de neurones de troisièmes estimées du canal, $\left\{ \widehat{h}[n] \right\}_{n=1}^{N_{TS}}$ ;
selon lequel ledit autre réseau de neurones résulte d'une phase d'apprentissage du autre réseau visant à minimiser une fonction de coût, ladite fonction de coût étant fonction de l'erreur quadratique moyenne entre les sorties obtenues dudit autre réseau en phase d'apprentissage et les valeurs souhaitées de la vraie réponse impulsionnelle du canal, obtenus par simulation.

11. Procédé d'amélioration de la détermination de l'estimée d'un canal de télécommunication selon la revendication 10, comprenant au moins l'une des dispositions i, j suivantes :

i/ les deuxièmes données d'entrée dudit autre réseau de neurones comprennent en outre au moins un élément parmi des informations probabilistes du support du canal délivrées en sortie du réseau de neurones d'estimation du support du canal et une estimée de la variance du bruit ;
j/ ledit autre réseau de neurones comprend :

- un ou plusieurs couches pour passer de $N_{in}$ aspects à $N_c$ aspects de tenseurs de taille $2 \times K_{TS}$, où $N_c$ est le nombre d'aspects intermédiaires du réseau et $N_{in}$ supérieur à $N_{TS}$ ;
- $N_L$ couches de type ResNet, et
- un ou plusieurs couches pour passer de $N_c$ à $N_{TS}$ aspects de tenseurs de taille $2 \times K_{TS}$.

12. Dispositif récepteur de télécommunication (10) adapté pour déterminer l'estimée d'un canal de télécommunication entre ledit dispositif récepteur et un dispositif émetteur, en fonction d'au moins une trame de signal comprenant $N_{TS}$ séquences pilotes prédéfinies, chacune de longueur $K_{TS}$, transmise via ledit canal à destination du dispositif récepteur de télécommunication, dans lequel une première estimation du canal de télécommunication ayant été effectuée, suite à la réception de ladite trame par ledit dispositif récepteur, en fonction de ladite trame reçue et desdites $N_{TS}$ séquences pilotes prédéfinies et ayant fourni au moins des premières estimés de la réponse impul-

sionnelle du canal $\left\{\widehat{\boldsymbol{h}}'[n]\right\}_{n=1}^{N_{TS}}$ ;

avec $\widehat{\boldsymbol{h}}'[n] = \left[\hat{h}_1'[n], \hat{h}_2'[n], \dots, \hat{h}_{K_{TS}}'[n]\right]$ où $\hat{h}_k'[n]$ correspond au $k^{ième}$ trajet de la réponse impulsionnelle du canal de télétransmission relatif à la $n^{ième}$ séquence pilote de la trame ;

ledit dispositif récepteur (10) étant **caractérisé en ce qu'**il comprend un réseau de neurones adapté pour recevoir en entrée de premières données d'entrée, et pour obtenir en sortie dudit réseau une estimation d'un masque binaire $\hat{m}_k$, $k$ = 1 à $K_{TS}$, déterminé en fonction desdites premières données d'entrée fournies, tel que :

$\hat{m}_k$= 0, si le trajet d'indice k est déterminé comme ne comportant que du bruit ;
$\hat{m}_k$= 1, sinon ;
lesdites premières données d'entrée étant fonction de la corrélation entre la trame reçue et lesdites séquences pilotes prédéfinies ;

ledit dispositif récepteur (10) étant adapté pour déterminer des deuxièmes estimées du canal, $\left\{\widehat{\boldsymbol{h}}''[n]\right\}_{n=1}^{N_{TS}}$

, en fonction des premières estimées du canal, $\left\{\widehat{\boldsymbol{h}}'[n]\right\}_{n=1}^{N_{TS}}$ , et du masque binaire déterminé, selon la règle suivante :

$$\hat{h}_k''[n] = \begin{cases} \hat{h}_k'[n], & si\ \widehat{m}_k = 1 \\ 0, & si\ \widehat{m}_k = 0 \end{cases}, \quad n = 1, \dots, N_{TS}\ .$$

[Fig. 1]

FIG.1

[Fig. 2]

FIG.2

Réponse impulsionnelle
du canal multi-trajets

amplitude

délai

[Fig. 3]

EP 4 391 464 A2

| TS | Data Block | TS | $\cdots$ | TS | Data Block | TS |
|---|---|---|---|---|---|---|

$n = 1$  $n = 2$  $n = N_{TS}-1$  $n = N_{TS}$

$$h[n] = \left[ h_1[n] \; ; \; h_2[n] \; ; \; \ldots \; ; h_L[n] \right], n = 1,\ldots,N_{TS}$$

L: étalement du canal

# FIG.3

[Fig. 4]

FIG.4

[Fig. 5]

FIG.5

[Fig. 6]

FIG.6

[Fig. 7]

[Fig. 8]

FIG.8

[Fig. 9]

FIG.9

[Fig. 10]

FIG.10

[Fig. 11]

EP 4 391 464 A2

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 113572708 A

**Littérature non-brevet citée dans la description**

- **J. M. VELAZQUEZ-GUTIERREZ ; C. VARGAS-RO-SALES.** Sequence Sets in Wireless Communication Systems: A Survey. *IEEE Communications Surveys & Tutorials,* 2017, vol. 19 (2), 1225-1248
- **D. LUAN ; J. THOMPSON.** Attention based neural networks for wireless channel estimation. *arXiv:2204.13465,* Avril 2022
- **J. L. BA ; J. R. KIROS ; G. E. HINTON.** Layer normalization. *arXiv:1607.06450,* Juillet 2016
- **D. LUAN ; J. THOMPSON.** Low complexity channel estimation with neural networks solutions. *arXiv:2201.09934v1,* Janvier 2022
- **K. HE ; X. ZHANG ; S. REN ; J. SUN.** Deep residual learning for image recognition. *IEEE Conférence on Computer Vision and Pattern Recognition (CVPR),* Juin 2016
- **M. V. LIER ; A. BALATSOUKAS-STIMMING ; H. CORPORAAL ; Z. ZIVKOVIC.** OPTCOMNET: Optimized Neural Networks for Low-Complexity Channel Estimation. *ICC 2020 - 2020 IEEE International Conférence on Communications (ICC),* Juin 2020, 1-6